# EUROPÄISCHE PATENTSCHRIFT

(11) **EP 1 354 790 B1**
(45) Veröffentlichungstag und Bekanntmachung des Hinweises auf die Patenterteilung: **29.06.2005**
(21) Anmeldenummer: 03008617.7
(22) Anmeldetag: 15.04.2003
(51) Int. Cl.: B62D 33/02, B62D 33/04, B62D 27/06

(54) **Klapprunge mit Riegeleinrichtung**
Foldable stanchion with locking device
Rancher pliant avec dispositif de verrouillage

(30) Priorität: 16.04.2002 DE 20205984 U
(43) Veröffentlichungstag der Anmeldung: 22.10.2003
(73) Patentinhaber: Load-Lok Deutschland Gmbh, 48683 Ahaus (DE)
(72) Erfinder: Jürgen Thieme, 48683 Ahaus (DE)
(74) Vertreter: Schulze Horn, Kathrin

(56) Entgegenhaltungen:
- EP-A- 0 335 427
- EP-A- 0 426 484
- WO-A-01/51339
- FR-A- 2 774 353

## Beschreibung

Die vorliegende Erfindung betrifft eine Klapprunge für den Aufbau eines Transportfahrzeugs oder -behälters, wobei die Runge mit ihrem oberen Ende an der seitlichen Kante eines oberen Aufbauteils seitwärts verschiebbar gehalten und geführt ist, wobei die Runge an ihrem unteren Ende einen Rungenfuß aufweist, der mittels eines über einen unteren Rungenteil verlaufenden Fußträgers mit der übrigen Runge verbunden ist, wobei die Verbindung zwischen dem Fußträger und der übrigen Runge durch ein Schwenkgelenk mit einer horizontal in Aufbau-Längsrichtung verlaufenden Schwenkachse gebildet ist, wobei der Fußträger mittels einer verstellbaren Riegeleinrichtung lösbar gegen den übrigen Teil der Runge verriegelbar ist, um den Rungenfuß mit einem an der Kante eines unteren Aufbauteils angeordneten oder ausgebildeten Rungenschuh zu verbinden, und wobei bei gelöster Riegeleinrichtung die Runge mit ihrem unteren Ende vom Aufbau weg nach außen verschwenkbar und so der Rungenfuß aus dem Rungenschuh entfernbar ist sowie dann die Runge insgesamt seitwärts verschiebbar ist.

Rungen der vorstehend genannten Art sind bekannt, sowohl aus der praktischen Anwendung als auch beispielsweise aus der DE 195 44 305 A1, und werden verbreitet an Aufbauten von z.B. Lastkraftwagen und Anhängern eingesetzt, insbesondere bei sogenannten Curtainsider-Aufbauten. An diese Rungen werden vielfältige Anforderungen gestellt. Auf der einen Seite soll die Runge in ihrem verriegelten Zustand in sich stabil sein und fest mit dem Aufbau verbunden sein, um alle Belastungen aufnehmen zu können, die eine im Aufbau befindliche Ladung auf die Runge ausübt. Andererseits soll die Runge mit möglichst geringem Zeit- und Kraftaufwand entriegelt und von der Unterkante des Aufbaus gelöst werden können, um sie zum Zwecke der Be- und Entladung des Aufbaus seitwärts, also in Aufbau-Längsrichtung, verschieben zu können. Bei den aus der praktischen Anwendung im LKW-Bereich bekannten Rungen ist bei einfacheren Ausführungen vorgesehen, daß nur die Klapprunge in sich verriegelt wird, wenn sie mit dem Aufbau eine starre Verbindung bilden soll. Weiterhin sind aus der Praxis etwas aufwendiger ausgeführte Rungen bekannt, bei denen ergänzend vorgesehen ist, daß die Runge an ihrem unteren Ende zusätzlich zu ihrem formschlüssigen Einsetzen in einen Rungenschuh auch noch mittels einer Keilverriegelung festgelegt wird. Bei der einfacheren, Runge ist für die Ver- und Entriegelung ein einzelner Schwenkhebel vorgesehen, der um eine horizontale, parallel zur Längsrichtung des Aufbaus verlaufende Schwenkachse verschwenkbar ist. Im Inneren der Runge werden durch die Hebelbewegung Schieberiegelelemente in Längsrichtung der Runge verschoben, wodurch wahlweise eine Verriegelung oder Entriegelung hergestellt wird. Bei den aufwendigeren Rungen mit der zusätzlichen Keilverriegelung sind zwei getrennte Riegeleinrichtungen mit je einem eigenen Betätigungshebel vorgesehen, wobei beide Betätigungshebel als Schwenkhebel mit je einer horizontalen, in Aufbaulängsrichtung verlaufenden Schwenkachse ausgeführt sind. Mit der zweiten Riegeleinrichtung wird hier der Riegelkeil ebenfalls in Längsrichtung der Runge verschoben. Diese doppelte Riegeleinrichtung führt ersichtlich zu einem hohen konstruktiven Aufwand und zu hohen Fertigungskosten. Unabhängig davon, ob die Runge einen oder zwei Betätigungshebel aufweist, bleibt der Nachteil festzustellen, daß hohe Betätigungskräfte an den Betätigungshebeln ausgeübt werden müssen, insbesondere um die Verriegelung herzustellen. Aufgrund der bei der Hebelverschwenkung und der zugeordneten Hebelmechanik aber nur begrenzten erzielbaren Kraftübersetzung sind die für die Verriegelung selbst aufbringbaren Kräfte begrenzt, so daß nicht eine optimale Stabilität der Runge in sich erreicht wird. Dies führt in der Praxis dazu, daß bei bewegten oder in Fahrt befindlichen Transportfahrzeugen oder Transportbehältern die Rungenteile gegeneinander Bewegungen ausführen, die zu Verschleiß innerhalb der Rungen führen. Verschleißende Rungen verlieren an Stabilität und Sicherheit und lassen dann nachteilig unerwünschte Bewegungen der Ladung innerhalb des Aufbaus zu.

Für die vorliegende Erfindung stellt sich deshalb die Aufgabe, eine Runge der eingangs genannten Art zu schaffen, die die aufgeführten Nachteile vermeidet und die bei einfacher Konstruktion und kostengünstiger Herstellbarkeit eine verbesserte Stabilität und Dauerhaltbarkeit hat und die eine verbesserte Bedienbarkeit für das Personal bietet.

Die Lösung dieser Aufgabe gelingt erfindungsgemäß mit einer Runge der eingangs genannten Art, die dadurch gekennzeichnet ist,
- daß die Riegeleinrichtung durch ein im unteren Rungenteil oder im Fußträger im Abstand vom Schwenkgelenk gelagertes Drehriegelelement gebildet ist, das um eine quer zur Rungen-Längsachse und quer zur Aufbau-Längsrichtung verlaufende Drehachse um sich selbst verdrehbar ist,
- daß das Drehriegelelement in einer ersten, einer Verriegelungsstellung entsprechenden Verdrehungsendstellung den Fußträger und den unteren Rungenteil in Anlage aneinander hält und gegeneinander verriegelt und
- daß das Drehriegelelement in einer zweiten, einer Entriegelungsstellung entsprechenden Verdrehungsendstellung die Verschwenkung des Fußträgers mit dem Rungenfuß einerseits und der übrigen Runge andererseits relativ zueinander freigibt.

Mit der Erfindung wird eine Runge geschaffen, bei der nicht, wie bisher üblich, eine Verschwenkung eines Hebels eine lineare Ver- und Entriegelungsbewegung hervorruft, sondern bei der eine Drehbewegung für die Ver- und Entriegelung genutzt wird. Mittels einer solchen Drehbewegung lassen sich mit einem relativ geringen mechanischen Aufwand die gegeneinander beweglichen Teile der Runge zuverlässig wahlweise gegeneinander fixieren und voneinander lösen. Durch die nun mögliche Kompaktheit wird der Platzbedarf der Riegeleinrichtung innerhalb der Runge wesentlich vermindert. Außerdem kann der Herstellungsaufwand reduziert werden, was zu günstigeren Kosten führt. Schließlich unterliegt eine solche Riegeleinrichtung einem wesentlich geringeren Verschleiß und hat ein wesentlich geringeres Versagensrisiko, weil sie in sich keine Gelenke oder ähnliche verschleiß- und schadensanfällige technische Elemente benötigt.

In einer ersten bevorzugten Ausgestaltung der Runge ist vorgesehen, daß der Fußträger aufbauinnenseitig von dem unteren Rungenteil verläuft, daß das Schwenkgelenk am oberen Ende des Fußträgers angeordnet ist und daß das Drehriegelelement im unteren Rungenteil unterhalb des Schwenkgelenks gelagert ist. In dieser Ausführung liegt eine aufbauaußenseitig durchgehende Oberfläche der Runge vor. Das Drehriegelelement liegt nahe dem unteren Rungenende und ist dort für das Bedienungspersonal gut erreichtbar.

Eine dazu alternative Ausgestaltung der Runge sieht vor, daß der Fußträger aufbauaußenseitig von dem unteren Rungenteil verläuft, daß das Schwenkgelenk am unteren Ende des unteren Rungenteils angeordnet ist und daß das Drehriegelelement im Fußträger oberhalb des Schwenkgelenks gelagert ist. In dieser Ausführung der Runge kann vorteilhaft das nach oben weisende Ende des Fußträgers als wirksamer Hebel beim Überführen der Runge aus ihrer geklappten Stellung in ihre gerade Stellung genutzt werden, bevor dann die Verriegelung erfolgt. Auf diese Weise kann sogar ein zu weit am Rand der Ladefläche plaziertes Ladungsstück mittels der Runge in Richtung zum Inneren des Raderaums verschoben werden, ohne daß dafür z.B. ein Gabelstapler benötigt wird.

In einer Weiterbildung der Runge ist vorgesehen, daß die Riegeleinrichtung als Bajonettverriegelung ausgeführt ist, wobei das Drehriegelelement mit Bajonettriegelteilen und der Fußträger oder der Rungenfuß oder der untere Rungenteil mit passenden Gegen-Bajonettriegelteilen versehen ist. Mit einer solchen Bajonettverriegelung läßt sich sehr schnell und einfach und mit einer relativ kurzen Drehbewegung die gewünschte Verriegelung zwischen den gegeneinander beweglichen Teilen der Runge herstellen oder lösen. Gleichzeitig ist eine solche Bajonettverriegelung in der Lage, hohe Kräfte auszuüben und aufzunehmen, so daß die gegeneinander beweglichen Teile der Runge in der Verriegelungsstellung mit sehr großer Kraft und dadurch mit hoher Sicherheit gegeneinander verriegelt sind. Hierdurch werden unerwünschte Bewegungen der Runge in ihrem verriegelten Zustand und dadurch verursachter Verschleiß weitestgehend ausgeschlossen.

Weiterhin schlägt die Erfindung vor, daß die Bajonettverriegelung Bereiche unterschiedlicher Steigung aufweist, wobei nahe den Verdrehungsendstellungen des Drehriegelelements die Steigung kleiner ist als im dazwischen liegenden Verdrehungsbereich. Mit dieser Gestaltung wird erreicht, daß für die Verdrehung des Drehriegelelements am Anfang der Drehbewegung und gegen Ende der Drehbewegung kleinere Kräfte ausreichen; in dem dazwischen liegenden Verdrehungsbereich müssen größere Kräfte aufgebracht werden, wobei in diesem Bereich gleichzeitig ein größerer Verstellweg erreicht wird. Auf diese Weise wird zunächst das Ineingriffbringen der Bajonettriegelteile und der Gegen-Bajonettriegelteile erleichtert; nach der Herstellung des Eingriffs kann dann ein Zusammenführen der gegeneinander beweglichen Teile der Runge auf dem weiteren Verdrehungsweg des Drehriegelelements erreicht werden. Die geringere Steigung am Ende der Verdrehung in Verriegelungsrichtung sorgt dafür, daß in der Verriegelungsstellung keine großen selbsttätigen Kräfte entstehen, die in Richtung einer Entriegelung wirken. Mit dem so ausgebildeten Drehriegelelement ist es dem Bedienungspersonal möglich, bei Bedarf eine an der Innenseite der Runge anliegende Ladung durch die Ausübung der Verdrehungskräfte am Drehriegelelement in Richtung zum Aufbauinneren zu verschieben, falls bei der Beladung des Aufbaus die Ladung nicht exakt, d.h. hier zu weit nach außen, positioniert wurde.

Alternativ zu der Bajonettverriegelung können das Drehriegelelement mit einem Grob- oder Schnellschraubgewinde und der Fußträger oder der Rungenfuß oder der untere Rungenteil mit einem passenden Gegengewinde versehen sein.

Auch hiermit wird die gewünschte Funktion erreicht. Dabei kann hier ein größerer Verdrehungswinkel für die Herstellung und Lösung der Verriegelung zweckmäßig sein, um gleichzeitig einen größeren Verstellweg der gegeneinander zu verriegelnden Teile bei in Eingriff miteinander befindlichen Riegelteilen zu erreichen.

Um bei der Betätigung des Drehriegelelements die vom Bedienungspersonal auszuführenden Bewegungen möglichst einfach zu halten, ist weiter bevorzugt vorgesehen, daß das Drehriegelelement zwischen seinen Verdrehungsendstellungen einen Drehwinkel zwischen etwa 90 und 270° aufweist. Damit ist für die Verstellung des Drehriegelelements zwischen seiner Verriegelungsstellung und seiner Entriegelungsstellung lediglich ein maximaler Bewegungsweg in Form eines Viertel- bis Dreiviertelkreises nötig.

Um Bedienungsfehler bei der Verstellung des Drehriegelelements sicher auszuschließen, ist weiter vorgesehen, daß der Drehwinkel des Drehriegelelements durch zwei Anschläge begrenzt ist.

Damit eine Bedienungsperson das Drehriegelelement möglichst einfach und mit problemlos aufbringbarem Kraftaufwand verstellen kann, ist zweckmäßig das Drehriegelelement mit einem vom Aufbauäußeren her zugänglichen, manuell betätigbaren, im wesentlichen radial zur Drehachse des Drehriegelelements verlaufenden Hebel versehen oder koppelbar. Mit einem solchen Hebel lassen sich ausreichend große Drehmomente auf das Drehriegelelement ausüben, auch wenn der Hebel nur manuell betätigt wird.

Um den Hebel in der Verriegelungsstellung des Drehriegelelements gegen Beschädigungen zu schützen und um dem Bedienungspersonal die Verriegelungsstellung augenfällig deutliche zu machen, ist bevorzugt der Hebel so am Drehriegelelement angeordnet oder anbringbar, daß er in der der Verriegelungsstellung entsprechenden Verdrehungsendstellung des Drehriegelelements parallel zur Längsrichtung der Runge, entweder nach oben oder nach unten weisend, verläuft.

Damit der Hebel bei Nichtbenutzung nicht oder möglichst wenig nach außen vorsteht, aber zugleich aber bei Bedarf problemlos und ohne Quetschgefahr für die Finger der Bedienungsperson ergriffen und betätigt werden kann, schlägt die Erfindung weiter vor, daß der Hebel mittels eines Schwenkgelenks gelenkig mit dem Drehriegelelement verbunden ist, wobei die Schwenkachse des Schwenkgelenks quer zur Drehachse des Drehriegelelements und quer zur Längsrichtung des Hebels verläuft. Zweckmäßig ist dabei zusätzlich vorgesehen, daß die Schwenkbewegung des Hebels auf das erforderliche Maß, z.B. maximal 30 bis 45°, begrenzt ist, damit die wirksame Länge des Hebels und damit das über den Hebel ausübbare Drehmoment noch ausreichend groß bleiben.

Wenn der Hebel nicht für die Verstellung des Drehriegelelements benötigt wird, sollte er möglichst nicht nach außen vorragen, sondern in einer Ruhelage flach an der Runge anliegen. Damit diese Ruhelage des Hebels selbsttätig eingenommen wird, ist zweckmäßig der Hebel durch wenigstens eine Feder mit einer Vorbelastungskraft beaufschlagt, die das freie Ende des Hebels in Richtung zur Ruhelage verschwenkt.

Um den Hebel und auch das Drehriegelelement besonders gut gegen mechanische Schäden durch von außen kommende Einwirkungen zu schützen, ist weiterhin vorteilhaft in der Runge eine Eintiefung oder ein Ausschnitt vorgesehen, die/der in der Verriegelungsstellung des Drehriegels und in der Ruhestellung des Hebels den Hebel so aufnimmt, daß er nicht über eine äußere Oberfläche der Runge vorragt. Zum einen werden dadurch Schäden am Hebel durch äußere mechanische Einwirkung vermieden. Zum anderen wird dadurch vorteilhaft auch eine Sicherung gegen eine ungewollte Verstellung, insbesondere gegen ein ungewolltes Entriegeln des Drehriegels erreicht. Wenn der Hebel und der Drehriegel z.B. durch Vibrationen oder eine starke Bremsung des. Fahrzeugs ungewollt in eine Drehbewegung versetzt werden, endet diese Drehbewegung schon nach einem sehr kleinen Drehwinkel, weil der Hebel dann an einer der seitlichen Begrenzungsflächen der Eintiefung oder des Ausschnitts zur Anlage kommt. Jede weitere selbsttätige Drehbewegung wird so sicher unterbunden und die Runge bleibt zuverlässig in ihrem verriegelten Zustand.

Um auch bei starken axialen Kräften, die während der Fahrt eines Transportfahrzeugs auf die Runge einwirken können, eine Verschiebung der Runge in Aufbaulängsrichtung sicher zu unterbinden, ist weiter vorgesehen, daß am Rungenfuß seitlich je eine Lasche angeformt ist, wobei die Laschen im verriegelten Zustand der Runge den Rungenschuh seitlich übergreifen. Bei entriegelter Runge werden die Laschen in Richtung zum Aufbauäußeren vom Rungenschuh entfernt, sodaß dann in gewünschter Weise eine ungehinderte seitliche Verschiebung der Runge möglich ist.

Bei den bisher beschriebenen Ausführungen der Runge dient die Riegeleinrichtung dazu, die gegeneinander verschwenkbaren Teile der Runge bedarfsweise gegeneinander zu verriegeln oder freizugeben. Zur bedarfsweisen zusätzlichen Verriegelung des Rungenfußes gegen den Rungenschuh schlägt die Erfindung vor, daß im Rungenfuß und/oder im Fußträger ein einen Teil des Rungenfußes und/oder des Fußträgers bildender Riegelkeil in Rungenlängsrichtung verschieblich geführt ist und daß am Drehriegelelement ein Betätigungsmittel für eine Verschiebung des Riegelkeils zwischen einer mit dem Rungenschuh in Eingriff stehenden Verriegelungsstellung und einer mit dem Rungenschuh außer Eingriff stehenden Entriegelungsstellung vorgesehen ist. Mit dieser Ausgestaltung wird erreicht, daß das Drehriegelelement neben der Verriegelung der relativ zueinander verschwenkbaren Rungenteile auch noch die bedarfsweise vorgesehene zusätzliche Verriegelung der Runge gegen den Rungenschuh bewirkt oder betätigt. Die Riegeleinrichtung erhält auf diese Weise vorteilhaft zwei Funktionen, für die bei den Rungen gemäß dem Stand der Technik bisher zwei separate Riegeleinrichtungen mit je einem eigenen Betätigungshebel eingesetzt werden mußten.

In konkreter Ausgestaltung ist dabei bevorzugt vorgesehen, daß das Betätigungsmittel für den Riegelkeil durch einen am Drehriegelelement vorgesehenen Exzenter gebildet ist, der bei Verdrehung des Drehriegelelements aus seiner Entriegelungsstellung in seine Verriegelungsstellung den Riegelkeil aus dessen Entriegelungsstellung in dessen Verriegelungsstellung bewegt. Hiermit wird auf technisch sehr einfache Weise die Drehbewegung des Drehriegelelements in eine für die Verschiebung des Riegelkeils erforderliche lineare Bewegung übersetzt. Das Maß der linearen Verschiebung des Riegelkeils kann dabei.einfach durch den Abstand des Exzenters von der Drehachse des Drehriegelelements sowie durch den zur Verfügung gestellten Drehwinkel des Drehriegelelements festgelegt werden.

Bevorzugt ist dabei der Exzenter durch einen auf der dem Aufbauinneren zugewandten Stirnseite des Drehriegelelements exzentrisch angeordneten Nocken gebildet. Bevorzugt hat der Nocken die Form eines niedrigen Zylinders. Hiermit wird eine besonders einfache, aber gleichzeitig doch sehr wirkungsvolle technische Konstruktion erreicht, die das Drehriegelelement in seiner Herstellung und Formgebung einfach hält und bei der nur ein kleiner Einbauraum benötigt wird, auch wenn das Drehriegelelement die zusätzliche Funktion der Verstellung des Riegelkeils mit übernimmt.

Eine weitere Ausgestaltung sieht vor, daß der Riegelkeil durch wenigstens eine Feder mit einer in Entriegelungsrichtung wirkenden Kraft vorbelastet ist. In dieser Ausgestaltung wird die Möglichkeit geboten, den Riegelkeil lediglich in Verriegelungsrichtung durch den Exzenter zu betätigen, während für die Bewegung in Entriegelungsrichtung die mindestens eine Feder sorgt.

Eine besonders hohe Integration von Funktionen mit möglichst wenigen Einzelteilen wird bei einer Ausführung der Runge erreicht, die dadurch gekennzeichnet ist, daß der Riegelkeil zugleich derjenige Teil des Rungenfußes oder Fußträgers ist, der die Gegen-Bajonettriegelteile oder das Gegengewinde aufweist, mit denen/dem das Drehriegelelement durch seine Verdrehung um sich selbst in und außer Eingriff bringbar ist.

In konkreter Weiterbildung ist dabei bevorzugt vorgesehen, daß der Riegelkeil plattenförmig ausgeführt ist und mit einer ovalen Durchbrechung versehen ist, deren längere Achse senkrecht zur Riegelkeil-Verschiebungsrichtung verläuft und an deren Innenumfang die Gegen-Bajonettriegelteile oder das Gegengewinde vorgesehen sind/ist. Wie oben erwähnt, ist der Riegelkeil in Längsrichtung der Runge, also in Vertikalrichtung verschieblich, in allen anderen Richtungen aber nicht bewegbar. Für die Verriegelung der Runge in sich wird der Riegelkeil quer zu seiner Verschiebungsrichtung beansprucht, in der er nicht beweglich ist, sodaß er ohne weiteres diese Verriegelungskräfte aufnehmen kann.

Hinsichtlich der Ausbildung der Bajonettverriegelung gibt es zwei bevorzugte Gestaltungen. Bei der einen Gestaltung ist vorgesehen, daß die am Drehriegelelement vorhandenen Bajonettriegelteile radial nach außen vorragende Teile sind und daß die am Rungenfuß oder Fußträger oder Riegelkeil vorhandenen Gegen-Bajonettriegelteile entsprechend geformte Ausnehmungen sind.

Eine dazu alternative Gestaltung sieht vor, daß die am Rungenfuß oder Fußträger oder Riegelkeil vorhandenen Bajonettriegelteile radial nach innen in eine Durchbrechung vorragende Teile sind und daß die am Drehriegelelement vorhandenen Gegen-Bajonettriegelteile entsprechend geformte Ausnehmungen sind.

Im verriegelten Zustand der Runge wirken auf diese von oben und unten her Schubkräfte ein. Um zu vermeiden, daß diese Schubkräfte beim Entriegeln der Runge zu einem plötzlichen und dadurch für das Bedienungspersonal gefährlichen Aufspringen der Runge führen, ist vorgesehen, daß das die Verbindung zwischen dem Fußträger und der übrigen Runge bildende Schwenkgelenk in Verriegelungsstellung der Runge eine Übertotpunktstellung einnimmt und daß der Totpunkt durch manuelles Ausüben einer zum Aufbauäußeren gerichteten Zugkraft auf die Runge überwindbar ist. Bei der Betätigung des Drehriegelelements in Entriegelungsrichtung behält so die Runge ihre Stellung bei. Erst nach dem Entriegeln wird dann die Runge nach außen geklappt, indem vom Bedienungspersonal eine ausreichend große, jedoch problemlos manuell aufbringbare, den Totpunkt überwindende Zugkraft an der Runge ausgeübt wird.

Insbesondere bei Aufbauten mit mehreren Ladeebenen kann es sinnvoll sein, nur einen oberen oder unteren Teil einer Runge seitwärts zu verschieben, um Zugang zu einem gewünschten Laderaumbereich zu schaffen. Hierfür ist erfindungsgemäß vorgesehen, daß die Runge als teilbare Runge mit je einem oberen und unteren Rungenteil ausgeführt ist, die lösbar miteinander verbunden sind.

In einer konkreten Weiterbildung ist dazu bevorzugt vorgesehen, daß die Rungenteile über eine Steckverbindung miteinander lösbar verbunden sind, die durch Bewegen der Rungenteile relativ zueinander in deren Axialrichtung oder in deren Querrichtung herstellbar und lösbar ist. Zur Sicherung der Verbindung kann ein geeignetes Riegelelement vorgesehen sein.

Damit die Runge die erforderliche Stabilität erhält und alle im Betrieb eines Transportfahrzeugs oder -behälters auftretenden Belastungen schadlos aufnehmen kann, sind bevorzugt der Rungenfuß und der Rungenschuh Schmiedeteile oder Gußteile aus Stahl und der Fußträger und die übrigen Runge gepreßte oder gerollte oder gekantete Stahlblechteile. Die besonders belasteten Teile, nämlich der Rungenfuß und der Rungenschuh, sind aufgrund der Ausführung als stählerne Schmiede- oder Gußteile besonders belastbar; die weiteren, weniger stark belasteten Teile der Runge sind auf relativ kostengünstige Weise herstellbar und weisen dabei dennoch ein für ihre Stabilität relativ geringes Gewicht auf. Das Drehriegelelement ist aufgrund seiner Formgebung mit dem Gewinde zweckmäßig ein Dreh-und Frästeil aus Stahl, damit es ebenfalls die auftretenden Belastungen schadlos und dauerhaft aufnehmen kann.

Bei Aufbauten mit einem an dessen unterer Kante umlaufenden Kantenprofil aus Stahl werden üblicherweise einzelne Rungenschuhe an den passenden Stellen angebracht, in der Regel angeschweißt. Bei Aufbauten, die anstelle des Kantenprofils aus Stahl ein Kantenprofil aus Aluminium aufweisen, ist das Anschweißen von Rungenschuhen aus Stahl nicht möglich. Hierfür schlägt die Erfindung vor, daß anstelle je eines Rungenschuhs pro Runge alternativ ein durchgehendes, mit einer Rungenschuhkontur ausgeführtes unteres Aufbau-Kantenprofil, vorzugsweise aus Leichtmetall, vorgesehen ist. Damit kann die Runge ohne Änderung ihres Rungenfußes auch mit einem derartigen Aufbau-Kantenprofil in Eingriff gebracht werden, was die Herstellung unterschiedlicher Rungenausführungen und den damit verbundenen Mehraufwand vermeidet.

Ausführungsbeispiele der Erfindung werden im folgenden anhand einer Zeichnung erläutert. Die Figuren der Zeichnung zeigen:
- Figur 1: eine Runge in einer ersten Ausführung in perspektivischer Ansicht,
- Figur 2: einen Rungenfuß als Teil der Runge aus Figur 1 sowie einen Rungenschuh und einen Abschnitt eines Aufbau-Kantenprofils in einer vergrößerten perspektivischen Ansicht,
- Figur 3: ein Drehriegelelement als Teil der Runge aus Figur 1, in einer vergrößerten perspektivischen Ansicht,
- Figur 4: das Drehriegelelement zusammen mit dem Rungenfuß in einer Entriegelungsstellung,

- Figur 5: das Drehriegelelement zusammen mit dem Rungenfuß in einer Verriegelungsstellung,
- Figur 6: ein zweites Ausführungsbeispiel der Runge anhand eines Drehriegelelements und eines Riegelkeils in perspektivischer, voneinander getrennter Darstellung,
- Figur 7: ein drittes Beispiel einer Runge anhand eines Teils eines Rungenfußes zusammen mit einem separat nochmals dargestellten Riegelkeil und einem Drehriegelelement in perspektivischer Darstellung,
- Figur 8: das Drehriegelelement aus Figur 7 für sich in vergrößerter perspektivischer Darstellung,
- Figur 9: die Runge in einer vierten Ausführung in perspektivischer Ansicht und
- Figur 10: die Runge in einer fünften Ausführung, ebenfalls in perspektivischer Ansicht,

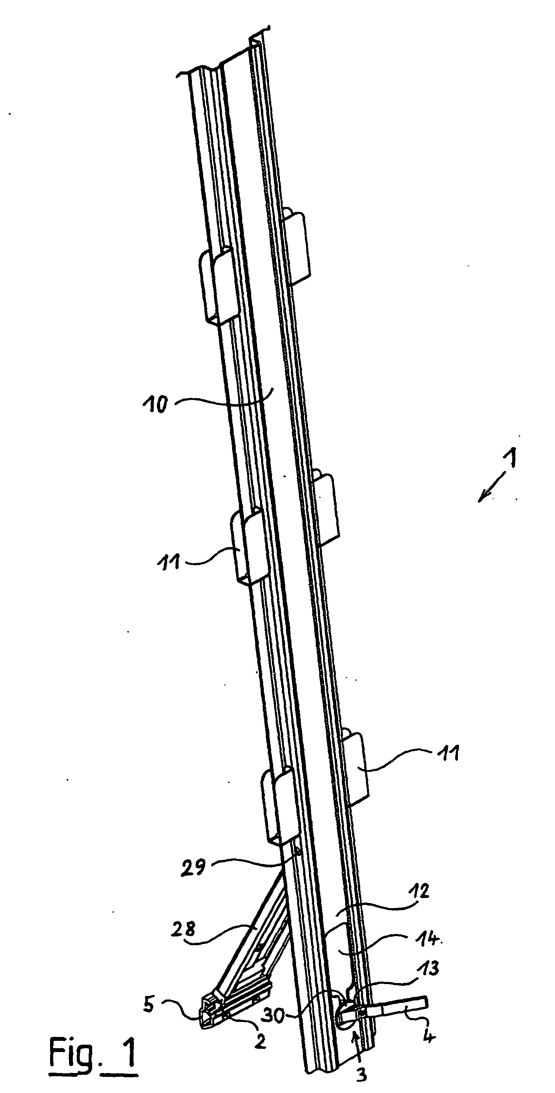

Figur 1 der Zeichnung zeigt in perspektivischer Ansicht eine erste Runge 1, die beispielsweise an LKW-Aufbauten eingesetzt wird. Das in Figur 1 nicht sichtbare obere Ende der Runge 1 ist mit Rollen versehen und in einer Schienenanordnung an der oberen seitlichen Kante des Aufbaus seitwärts verschiebbar. Mit ihrem unteren Ende ist die Runge 1 mit einem Rungenschuh 5 lösbar verbindbar, der an einer unteren seitlichen Kante des Aufbaus angebracht.ist, wobei in der Zeichnung der Aufbau im übrigen nicht dargestellt ist. Wenn die Runge 1 mit dem Rungenschuh 5 verbunden ist, ist die Runge 1 in ihrer Position fixiert. Mittels Lattentaschen 11, die an beiden Seiten des Rungengrundkörpers 10 vorgesehen sind, können Holz-oder Leichtmetall-Latten gehaltert werden, die horizontal zwischen benachbarten Rungen 1 verlaufen und eine innerhalb des Aufbaus befindliche Ladung gegen seitliches Herausfallen aus dem Aufbau sichern. Nach außen hin ist ein solcher Aufbau üblicherweise durch eine verschiebbare Plane abgedeckt.

Zum Zweck eines ungehinderten Be- und Entladens des Aufbaus von seinen Längsseiten her kann die Runge 1 an ihrem unteren Ende von dem Rungenschuh 5 gelöst werden und ist dann, nur noch an ihrem oberen Ende hängend, seitwärts verfahrbar.

Zur wahlweisen Ver- und Entriegelung der Runge 1 ist im unteren Endbereich 12 der Runge 1 eine Riegeleinrichtung 3 vorgesehen. Auf der Rückseite der Runge 1, die zum Inneren des Aufbaus weist, ist außerdem ein Rungenfuß 2 angeordnet, der über einen Fußträger 28 mit der übrigen Runge 1 verbunden ist. Der Fußträger 28 verläuft vom Rungenfuß 2 hinter der Runge 1 über einen kleinen Teil von deren Länge nach oben und ist mittels eines Schwenkgelenks 29 an seinem oberen Ende mit der übrigen Runge 1 schwenkbeweglich verbunden. Die Schwenkachse des Schwenkgelenks 29 verläuft quer zur Rungenlängsrichtung und parallel zur Aufbaulängsrichtung

In der verriegelten Stellung, in der die Runge 1 starr mit dem Aufbau verbunden ist, liegt der Fußträger 28 parallel zum unteren Bereich 12 der Runge 1 an dieser an und ist in dieser Lage durch die Riegeleinrichtung 3 fixiert. Der Rungenfuß 2, der am unteren Ende des Fußträgers 28 befestigt, zweckmäßig angeschweißt, ist, hat dann seinen maximalen Abstand vom oberen Ende der Runge 1 und wird dadurch fest von oben nach unten in eine passende Aufnahme im Rungenschuh 5 gedrückt und so in diesem gehalten.

Zum Lösen der Runge 1 vom Rungenschuh 5 wird die Riegeleinrichtung 3 in ihre in Figur 1 gezeigte Entriegelungsstellung überführt. Hierzu besitzt die Riegeleinrichtung 3 einen Betätigungshebel **4,** der manuell verstellbar ist. In dieser Entriegelungsstellung ist der Fußträger 28 von der übrigen Runge 1 gelöst, wodurch die in Figur 1 sichtbare Verschwenkung des Fußträgers 28 relativ zur übrigen Runge 1 ermöglicht wird. Diese Verschwenkungsstellung wird eingestellt, indem eine Bedienungsperson das untere Ende 12 der Runge 1 ergreift und vom Aufbau weg nach außen hin verschwenkt. Hierdurch wandert der Rungenfuß 2 um einen gewissen Weg nach oben, bis er aus dem Rungenschuh 5 freikommt. Danach ist dann die Runge 1, wie oben schon erwähnt, seitwärts verfahrbar, um den Aufbau für das Be- oder Entladen möglichst frei zugänglich zu machen.

Die Verriegelungseinrichtung 3 besitzt zur Herstellung und Lösung der Verriegelung ein um seine Mittelachse drehbares Drehriegelelement 30, wobei diese Mittel- oder Drehachse senkrecht zur Längsrichtung der Runge 1 und senkrecht zur Längsrichtung des Aufbaus verläuft. Die Funktionsweise der Riegeleinrichtung 3 entspricht hier im weitesten Sinne der Funktion eines Bajonettverschlusses oder einer Schraube, der/die wahlweise mit dem Rungenfuß 2 oder Fußträger 28 in Eingriff und außer Eingriff bringbar ist, indem die Riegeleinrichtung 3 mit Hilfe des Hebels 4 entsprechend um sich selbst verdreht wird.

Um den Hebel 4 bei Nichtgebrauch platzsparend und geschützt unterbringen zu können, ist oberhalb einer Ausnehmung 13, in der das Drehriegelelement 30 gelagert ist, eine weitere Ausnehmung 14 vorgesehen, in der der Hebel 4 in der Verriegelungsstellung der Riegeleinrichtung 3 Platz findet.

Wenn die Runge 1 nach Abschluß eines Be- oder Entladevorgangs wieder mit dem Aufbau fest verbunden werden soll, wird sie zunächst durch seitliches Verschieben wieder in ihre Soll-Position gebracht. In dieser Position wird dann von der Bedienungsperson das untere Ende 12 der Runge 1 vom Aufbau weggeschwenkt; gleichzeitig wird der Fußträger 28 mit dem Rungenfuß 2 zum Aufbau hin verschwenkt, bis der Rungenfuß 2 oberhalb der zugehörigen Aufnahme im Rungenschuh 5 liegt. Durch Heranschwenken des unteren Endes 12 der Runge 1 an den Aufbau wird dann der Rungenfuß 2 in die zugehörige Aufnahme im Rungenschuh 5 eingeführt und der Fußträger 28 in eine zur übrigen Runge 1 parallele Lage gebracht. Durch Verdrehen der Riegeleinrichtung 3 um einen entsprechenden Drehwinkel, z.B. 90°, wird die Riegeleinrichtung 3 in Eingriff mit dem Rungenfuß 2 oder dem Fußträger 28 gebracht, wodurch der Fußträger 28 mit dem Rungenfuß 2 und die übrige Runge 1 gegeneinander fixiert werden. Damit ist die Runge 1 wieder ein in sich starres Gebilde, das nun ausreichend fest und unverrückbar mit dem übrigen Aufbau verbunden ist.

Falls besonders hohe Belastungen in Aufbau-Längsrichtung auf die Runge 1 einwirken können, kann diese zusätzlich mittels eines Riegelkeils, der im Rungenfuß 2 vorgesehen ist, gegen den Rungenschuh 5 verriegelt werden, wie dies anhand der folgenden Figuren erläutert wird.

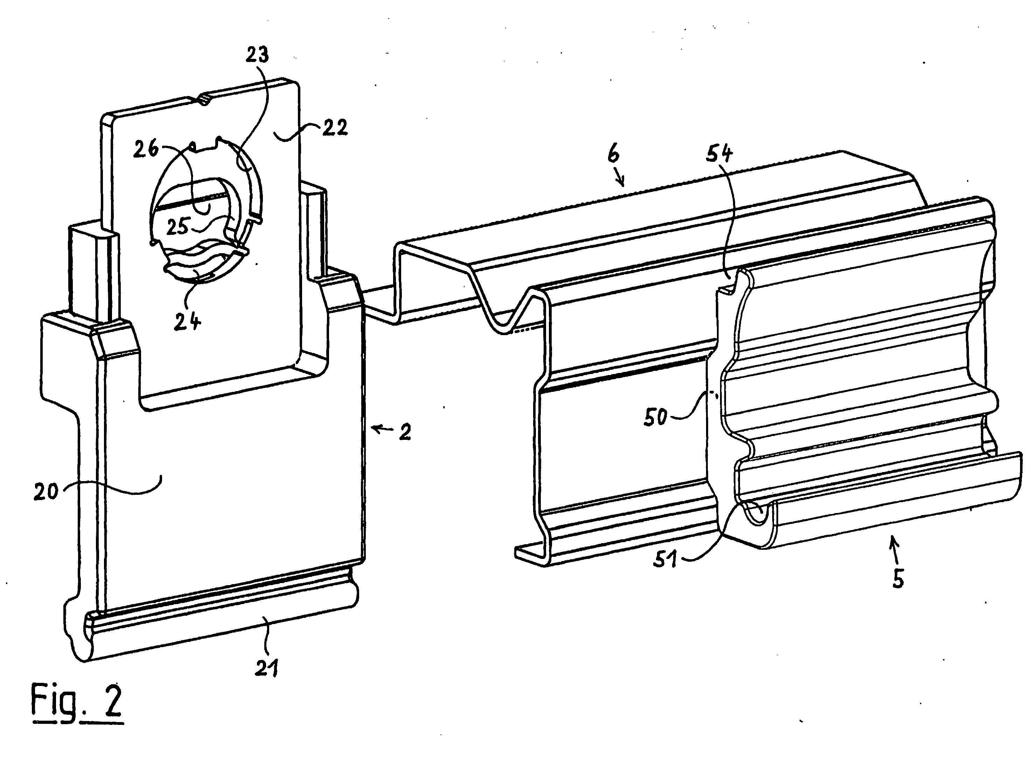

Figur 2 der Zeichnung zeigt in perspektivischer Ansicht links den Rungenfuß 2, nun ohne den zugehörigen Fußträger 28. Rechts vom Rungenfuß 2 ist der zugehörige Rungenschuh 5 dargestellt, der seinerseits an einem hier nur abschnittsweise dargestellten Kantenprofil 6 des Aufbaus befestigt ist.

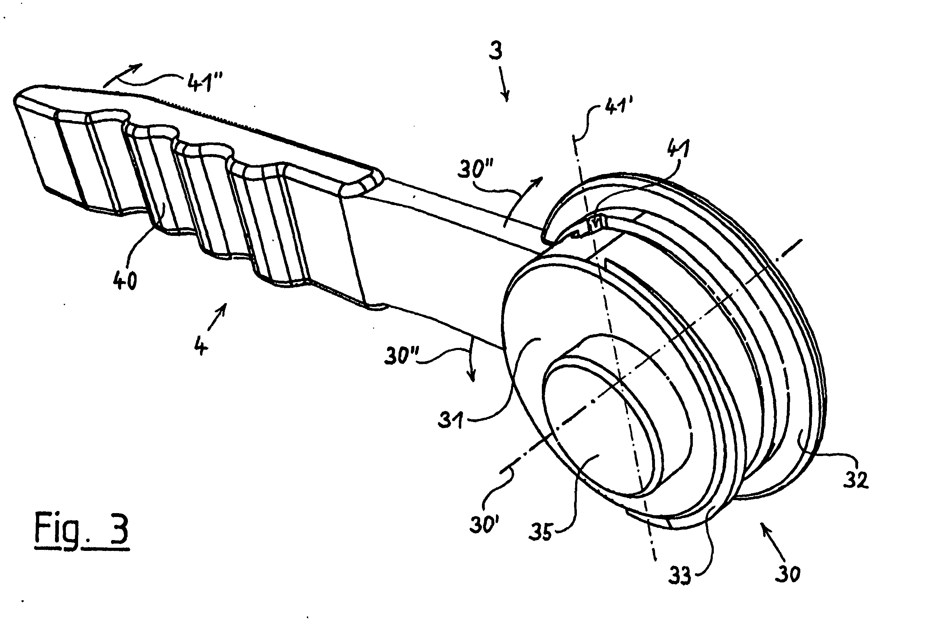

Der Rungenfuß 2 besteht aus einem Fußkörper 20, der ein abgerundetes unteres Ende 21 aufweist. Dieses abgerundete untere Ende 21 ist formschlüssig in eine passend gerundete, nach oben bin offene Ausnehmung 51 im Rungenschuh 5 einsetzbar. Der Fußkörper 20 besteht aus Stabilitätsgründen vorzugsweise aus einem Schmiedeteil aus Stahl. Im oberen Teil des Rungenfußes 2 ist eine fest mit dem übrigen Fußkörper 20 verbundene Platte 22 vorgesehen, die eine Durchbrechung 23 mit Bajonett-Riegelteilen 23' aufweist. Diese Bajonett-Riegelteile 23' stellen das Gegenstück zu am Drehriegelelement 30 vorgesehenen Bajonett-Riegelteilen 33 (vergleiche Fig. 3) dar, die zur Verriegelung der Runge 1 mit der Platte 22 in Eingriff miteinander bringbar sind.

Durch die Durchbrechung 23 hindurch ist ein Teil eines Riegelkeils 24 sichtbar, der in Vertikalrichtung, also in Rungenlängsrichtung, verschieblich innerhalb des Rungenfußes 2 geführt ist. Im Riegelkeil 24 ist eine Durchbrechung 25 angebracht. Diese Durchbrechung 25 dient zur Aufnahme eines Betätigungselementes für die vertikale Verschiebung des Riegelkeils 24 zwischen einer unteren Verriegelungsstellung und einer oberen Entriegelungsstellung. Das Betätigungselement ist an der Riegeleinrichtung 3 vorgesehen. Dies wird anhand der Figur 3 noch erläutert.

Durch die Durchbrechung 25 im Riegelkeil 24 hindurch ist schließlich eine Rückwand 26 des Rungenfußes 2 erkennbar, die zusammen mit der Platte 22 die Schiebeführung für den Riegelkeil 24 bildet. Das untere Ende des Riegelkeils 24 ragt in der Verriegelungsstellung des Riegelkeils 24 nach unten hin aus der Führung hervor; in der Entriegelungsstellung des Riegelkeils 24 ist der Riegelkeil 24 nach oben hin soweit zurückgezogen, daß er nicht mehr aus der Führung vorragt.

Wenn der Rungenfuß 2 in den zugehörigen Rungenschuh 5 eingesetzt ist, kann eine feste Verriegelung der beiden Teil gegeneinander durch Verschieben des Riegelkeils 24 nach unten erfolgen. Der dann aus der Führung nach unten hin vorragende Endbereich des Riegelkeils 24 liegt dann in der Aufnahme 54 am oberen Rand des Rungenschuhs 5. Mit seiner Rückseite 50 ist der Rungenschuh 5 an dem Aufbau-Kantenprofil 6 festgelegt, üblicherweise angeschweißt.

Figur 3 der Zeichnung zeigt in vergrößerter perspektivischer Ansicht die Riegeleinrichtung 3. Der wesentliche Teil der Riegeleinrichtung 3 ist das um sich selbst verdrehbare Drehriegelelement 30, das die Grundform eines Zylinders hat. Auf der einen Stirnseite, die im zusammengebauten Zustand der Riegeleinrichtung 3 nach außen weist, ist ein verbreiteter Kragen 32 angebracht, der auf der Außenfläche der Runge 1 um die Durchbrechung 13 herum aufliegt. Auf dem Außenumfang des zylindrischen Teils des Drehriegelelements 30 sind die Bajonett-Riegelteile 33 angeformt, die mit den Gegen-Bajonett-Riegelteilen 23' in der Durchbrechung 23 in der Platte 22 des Rungenfußes 2 in und außer Eingriff bringbar sind.

Zur Verdrehung des Drehriegelelementes 30 um seine Drehachse 30' dient ein Hebel 4 mit einem Griffende 40. Dieser Hebel 4 ist mittels eines Schwenklagers 41 mit einer Schwenkachse 41' begrenzt verschwenkbar mit dem Drehriegelelement 30 verbunden. Die Schwenkachse 41' verläuft quer zur Drehachse 30' des Drehriegelelements 30. Durch eine hier nicht sichtbare Vorbelastungsfeder wird das Griffende 40 des Hebels 4 in Richtung zur Runge, d.h. gemäß Figur 3 zum Betrachter hin, vorbelastet.

Auf der in Figur 3 dem Betrachter zugewandten inneren Stirnseite 31 des Drehriegelelementes 30 ist exzentrisch zur Drehachse 30' ein Exzenternocken 35 mit zylindrischer Grundform, aber gegenüber dem übrigen Drehriegelelement 30 verringertem Außendurchmesser angeformt. Dieser Exzenternocken 35 liegt im zusammengebauten Zustand der Riegeleinrichtung 3 in der Durchbrechung 25 im Riegelkeil 24. Bei Verdrehung des Drehriegelelementes 30 um seine Drehachse 30' überträgt demnach dieser Exzenternocken 35 eine lineare Verschiebungsbewegung in Vertikalrichtung auf den Riegelkeil 24. In dieser Ausführung des Drehriegelelementes 30 verbindet dieses mittels seiner Bajonett-Riegelteile den Rungenfuß 2 und den Fußträger 28 mit der übrigen Runge 1 und verschiebt gleichzeitig mittels seines Exzenternockens 35 den Riegelkeil 24 zur Verriegelung des Rungenfußes 2 gegen den zugehörigen Rungenschuh 5.

Die Sicherung der Lage des Drehriegelelements 30 in der in Figur 1 dargestellten Durchbrechung 13 im unteren Teil 12 der Runge 1 bewirkt beispielsweise ein Sprengring, der nach dem Einsetzen des Drehriegelelements 30 in die Durchbrechung 13 in eine hier nicht bezifferte Nut im Außenumfang des Drehriegelelements 30 unmittelbar hinter der Runge eingesetzt ist.

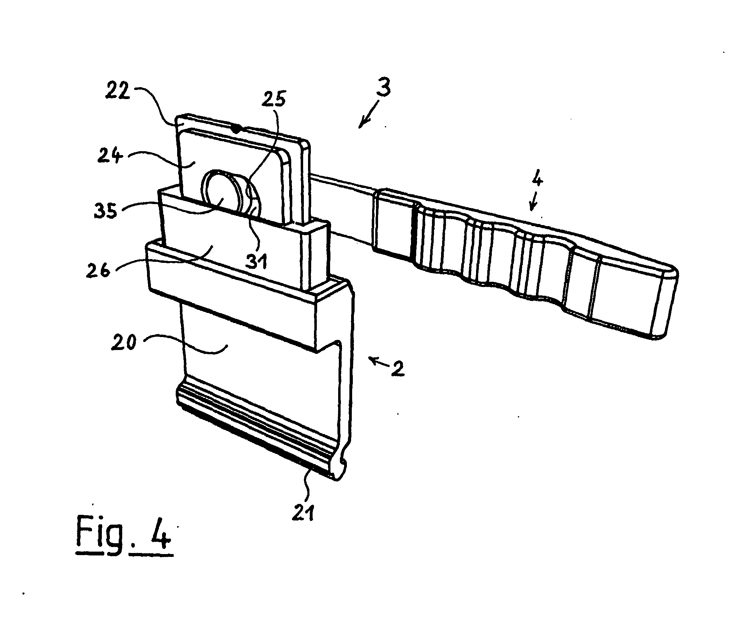

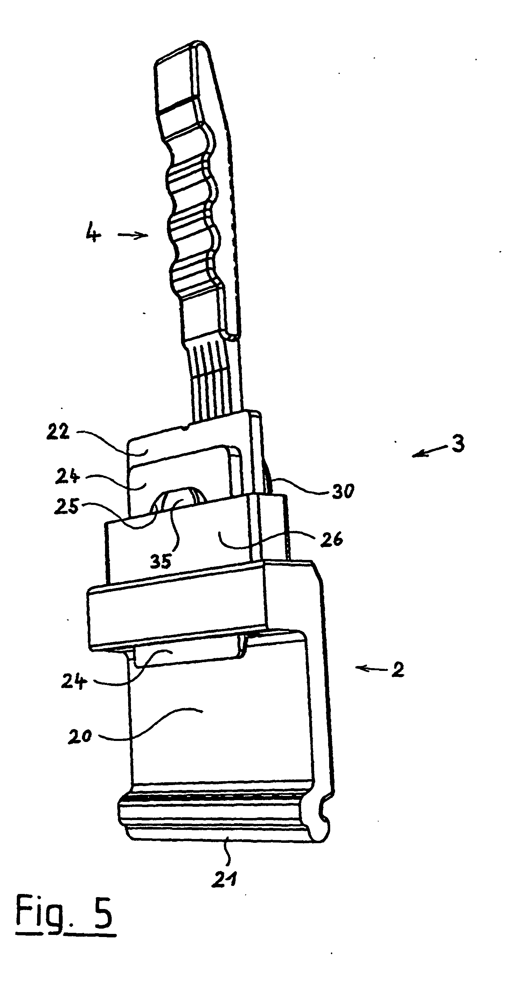

Die Figuren 4 und 5 der Zeichnung zeigen den Rungenfuß 2 zusammen mit der Riegeleinrichtung 3 einmal in Entriegelungsstellung und einmal in Verriegelungsstellung. In der in Figur 4 dargestellten Entriegelungsstellung befindet sich der Hebel 4 der Riegeleinrichtung 3 in einer waagerechten Position, also in einer senkrecht zur Längsachse der Runge 1 verlaufenden Ausrichtung. In dieser Position des Hebels 4 hat der Exzenternocken 35 seine höchste Lage erreicht, wodurch entsprechend auch der Riegelkeil 24 seine höchste Lage einnimmt, in der sein unteres Ende in das Innere der Führung zurückgezogen und damit von dem hier nicht gezeichneten Rungenschuh 5 entfernt ist. Gleichzeitig befinden sich in dieser Stellung des Hebels 4 und des Drehriegelelements 30 die Bajonett-Riegelteile des Drehriegelelements 30 außer Eingriff mit den Gegen-Bajonett-Riegelteilen der Durchbrechung 23 im Rungenfuß 2 oder Fußträger 28, wodurch nun alle Verriegelungen gelöst sind und die Runge 1 vom Rungenschuh 5 getrennt werden und dann verschoben werden kann.

In der in Figur 5 gezeigten Verriegelungsstellung der Riegeleinrichtung 3 zeigt der Hebel 4 nach oben, verläuft nun also in Längsrichtung der Runge 1. In dieser Stellung der Riegeleinrichtung 3 und ihres Drehriegelelements 30 hat der Exzenternocken 35 eine tiefere Lage erreicht. Demzufolge nimmt nun auch der Riegelkeil 24 eine tiefere Lage ein, in der sein unterer Teil über die Riegelkeilführung nach unten hin vorragt. In dieser Stellung greift der untere Teil des Riegelkeils 24 in die in Figur 2 sichtbare Ausnehmung 54 im Rungenschuh 5 ein. Gleichzeitig befinden sich in dieser Stellung der Riegeleinrichtung 3 und ihres Drehriegelelementes 30 dessen Bajonett-Riegelteile in Eingriff mit den Gegen-Bajonett-Riegelteilen der Durchbrechung 23 im Rungenfuß 2 oder Fußträger 28, wodurch die gegeneinander verschwenkbaren Teile der Runge 1 in einer parallelen und fest aneinander anliegenden Lage fixiert sind.

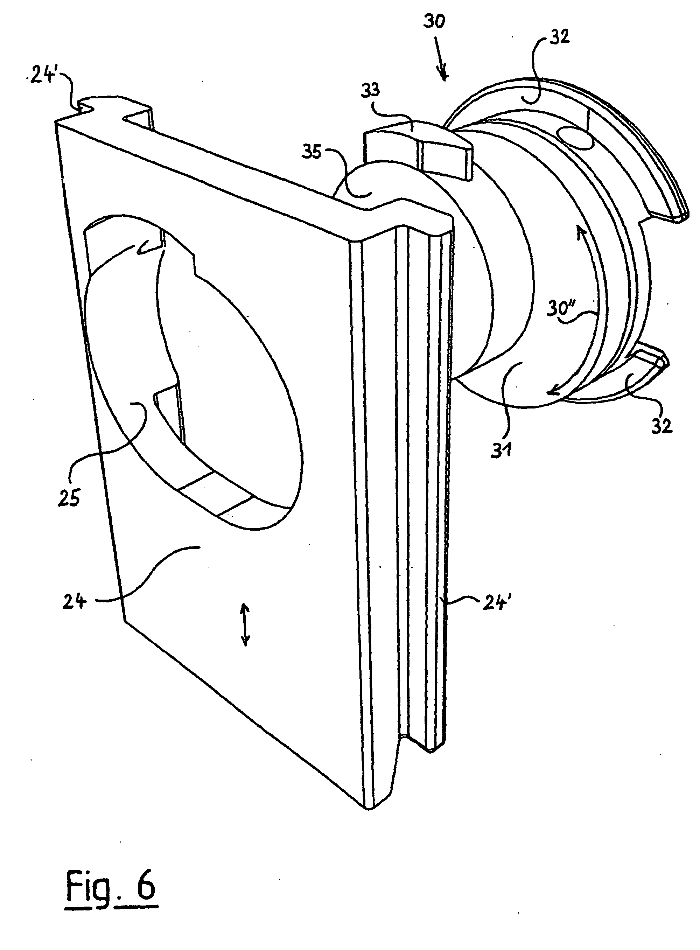

Die im folgenden erläuterten Figuren 6 bis 8 der Zeichnung veranschaulichen Ausführungsbeispiele, bei denen im Unterschied zu dem Ausführungsbeispiel gemäß den Figuren 1 bis 5 sowohl die Verriegelung der relativ zueinander beweglichen Teile der Runge 1 gegeneinander als auch die Verschiebung des Riegelkeils 24 allein durch den Exzenternocken 35 des Drehriegelelements 30 erfolgt.

Figur 6 zeigt als erste Ausführung mit dieser Eigenschaft in perspektivischer Darstellung links einen Riegelkeil 24 und rechts dahinter ein dazu passendes Drehriegelelement 30. Der Riegelkeil 24 ist auch hier plattenförmig ausgebildet und besitzt an seinen beiden vertikalen Kanten je einen Führungsflansch 24', mit denen der Riegelkeil 24 im Inneren eines hier nicht dargestellten Rungenfußes oder Fußträgers verschieblich geführt ist. In dem plattenförmigen Riegelteil 24 ist eine Durchbrechung 25 angebracht, die eine ovale Grundform hat, wobei die längere Achse dieses Ovals quer zur Längsrichtung des Riegelkeils 24, im Einsatzzustand also horizontal, verläuft.

Das Drehriegelelement 30 hat auch hier einen zylindrischen Grundkörper mit einem im Durchmesser vergrößerten Kragen 32, der im zusammengebauten Zustand an der Außenfläche der zugehörigen Runge 1, die hier nicht dargestellt ist, anliegt. Der zylindrische Grundkörper des Drehriegelelements 30 liegt dann in der Durchbrechung 13 (vergleiche Figur 1) der Runge 1. Abgesehen von einer Nut zur Aufnahme eines Sprengrings, mit dem das Drehriegelelement 30 in der Durchbrechung 13 gesichert wird, ist hier der Außenumfang des Grundkörpers des Drehriegelelements 30 glatt ausgebildet, insbesondere ohne irgendwelche Riegelvorsprünge oder dergleichen Teile.

Von der zum Aufbauinneren, also hier zum Betrachter weisenden inneren Stirnseite 31 des Drehriegelelements 30 steht wieder ein exzentrisch zur Drehriegelelement-Drehachse angeordneter, in seiner Grundform ebenfalls zylindrischer Exzenternocken 35 vor. Am Außenumfang dieses in seiner Grundform zylindrischen Exzenternockens 35 ist wenigstens ein nach außen vorragendes Bajonett-Riegelteil 33 angeformt. Dieses Bajonett-Riegelteil 33 sorgt im Zusammenwirken mit der passend geformten Durchbrechung 25 im Riegelkeil 24 für zwei Funktionen: Die erste Funktion besteht darin, das Drehriegelelement 30 zusammen mit dem zugehörigen Teil der Runge im Verriegelungszustand fest gegen den Riegelkeil 24 mit dem zu diesem gehörenden zweiten Teil der Runge zu fixieren; die zweite Funktion besteht darin, den Riegelkeil 24 zwischen seiner Entriegelungsstellung und seiner Verriegelungsstellung in seiner Längsrichtung, also in Vertikalrichtung, zu verschieben. Beide Funktionen werden durch eine einfache Drehbewegung des Drehriegelelements 30 um seine Mittelachse bewirkt, hier durch eine Drehung um etwa 90°. In der Figur 6 ist das Drehriegelelement 30 in seiner EntriegelungsStellung gezeigt, in der das vorragende Bajonett-Riegelteil 33 behinderungsfrei durch die Durchbrechung 25 hindurch bewegt werden kann.

Zur Verriegelung wird das Drehriegelelement 30, zusammen mit dem nicht dargestellten weiteren Teil der zugehörigen Runge, in Richtung zum Riegelkeil 24 bewegt, bis der Exzenternocken 35 mit dem von diesem nach außen vorragenden Bajonett-Riegelteil 33 passend in der Durchbrechung 25 liegt. Durch Verdrehen des Drehriegelelements 30 um etwa 90° im Uhrzeigersinn (bei Betrachtung von außen her) wird das vorragende Bajonett-Riegelteil 33 entsprechend um 90° verdreht und gegen die Durchbrechung 25 im Riegelkeil 24 in Axialrichtung des Drehriegelelements 30 verriegelt. Gleichzeitig wandert der Exzenternocken 35 aufgrund seiner zur Drehachse des Drehriegelelements 30 exzentrischen Anordnung bei dieser Drehbewegung nach unten, wodurch der Riegelkeil 24 eine entsprechende Bewegung nach unten hin zwangsweise erfährt und so in seine Verriegelungsstellung überführt wird.

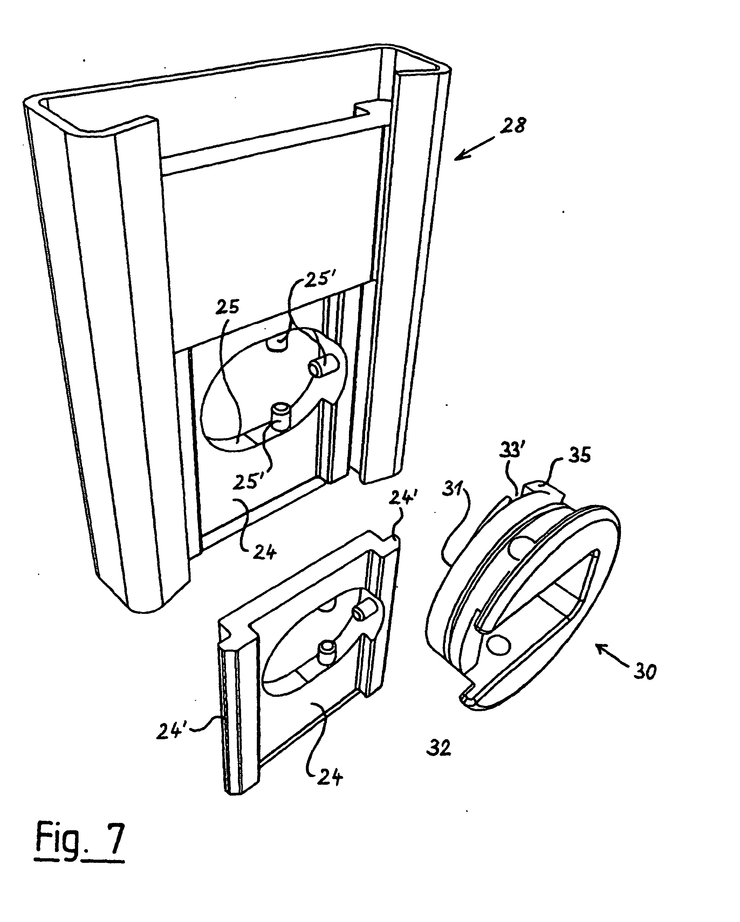

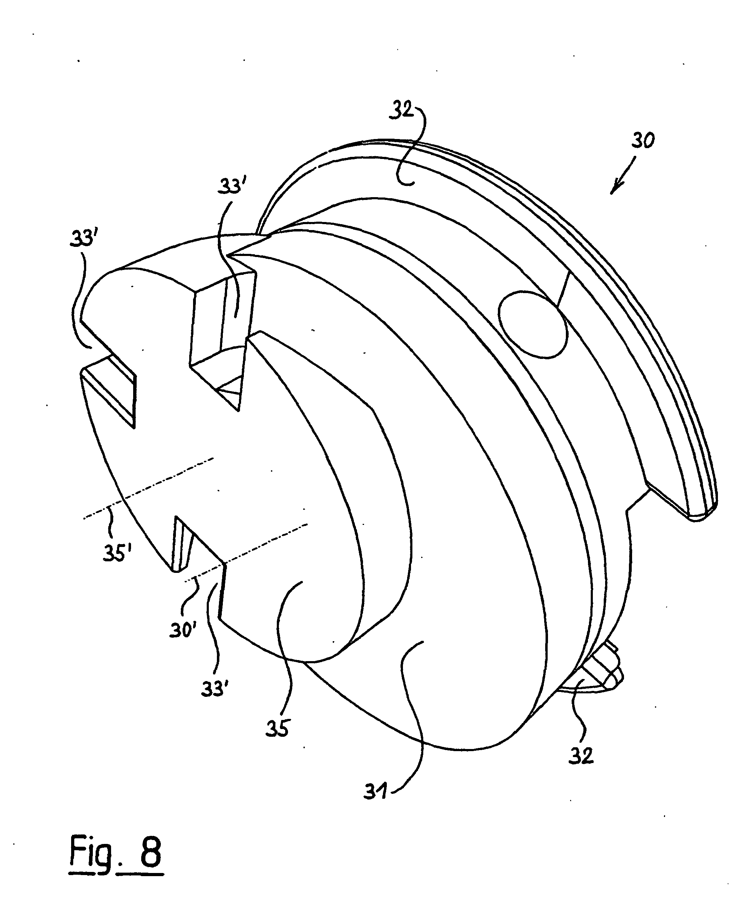

Die Figuren 7 und 8 zeigen eine Abwandlung der Ausführung gemäß Figur 6. Die Abwandlung besteht im wesentlichen darin, daß bei dem Ausführungsbeispiel nach Figur 7 und 8 am Außenumfang des am Drehriegelelement 30 angeformten Exzenternockens 35 keine nach außen vorstehenden Riegelteile sondern in Radialrichtung des Exzenternockens 35 nach innen laufende Ausnehmungen 33' vorgesehen sind. Dementsprechend sind in der Durchbrechung 25 im Riegelkeil 24 passend zu den Ausnehmungen 33' angeordnete und geformte, radial nach innen in die Durchbrechung weisende, vorragende Bajonett-Riegelteile 25' angeordnet. Auch mit diesen Bajonett-Riegelteilen 25', 33' wird die zuvor im Zusammenhang mit Figur 6 beschriebene doppelte Funktion erreicht, nämlich die gleichzeitige Verriegelung des Drehriegelelements 30 zur Fixierung der gegeneinander beweglichen Rungenteile und die Verschiebung des Riegelkeils 24 zwischen seiner Entriegelungs- und Verriegelungsstellung.

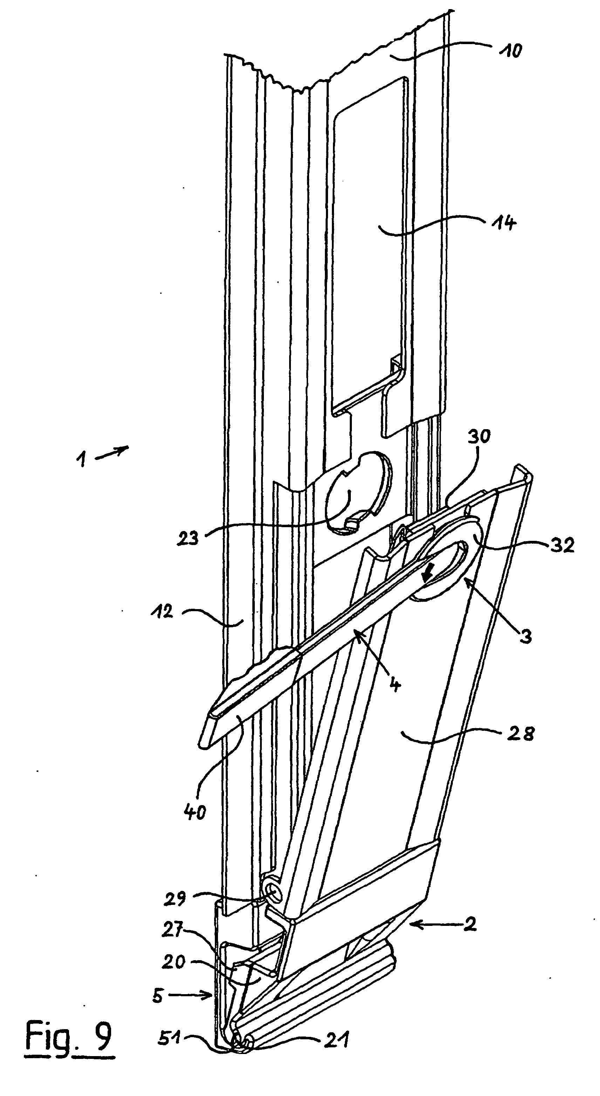

Figur 9 der Zeichnung zeigt die Runge in einem vierten Ausführungsbeispiel, wieder in einer perspektivischen Ansicht schräg von außen, wobei in Figur 9 der obere Teil der Runge 1 nicht dargestellt ist.

Auch bei diesem Ausführungsbeispiel besteht die Runge 1 aus einem Rungengrundkörper 10, der in Vertikalrichtung verläuft. An ihrem unteren Ende ist die Runge 1 über ein Schwenkgelenk 29 mit einer horizontalen, in Aufbaulängsrichtung verlaufenden Schwenkachse mit einem Fußträger 28 gelenkig verbunden. Der Fußträger 28 erstreckt sich vom Schwenkgelenk 29 über den unteren Teil 12 der Runge 1 nach oben und liegt dabei relativ zum Aufbau eines hier im übrigen nicht gezeigten Transportfahrzeuges an der Außenseite der Runge 1.

Mit dem unteren Ende des Fußträgers 28 ist ein Rungenfuß 2 verbunden, vorzugsweise verschweißt. Der Rungenfuß 2 besteht aus einem Fußkörper 20 und einem abgerundeten, verdickten Unterrand 21.

Der Rungenfuß 2 paßt in einen Rungenschuh 5, der an einem hier im übrigen nicht dargestellten Aufbau eines Transportfahrzeuges an dessen seitlichem unteren Rand angebracht ist. Der Rungenschuh 5 ist nach unten hin durch eine Aufnahme 51 begrenzt, die in ihrer Form an den Unterrand 21 des Rungenfußes 2 angepaßt ist.

Im oberen Bereich des Fußträgers 28 ist eine Riegeleinrichtung 3 angeordnet, mit der der Fußträger 28 und die übrige Runge 1 wahlweise gegeneinander verriegelbar oder, wie in Figur 9 dargestellt, voneinander lösbar sind. Hierzu besitzt die Riegeleinrichtung 3 ein Riegelelement 30, das an der in Figur 9 nach hinten weisenden Seite des Fußträgers 28 liegt und deshalb zum größten Teil nicht sichtbar ist. Das Riegelelement 30 ist um eine senkrecht zur Längsrichtung der Runge 1 und quer zur Aufbaulängsrichtung des zugehörigen Transportfahrzeugs verlaufende Drehachse um sich selbst verdrehbar.

In dem in Figur 9 gezeigten Beispiel hat das Riegelelement 30 einen Drehwinkel von 90° zwischen seiner Verriegelungsstellung und seiner in Figur 9 dargestellten Lösestellung. In dieser Lösestellung ist das Riegelelement 30 in seiner Axialrichtung aus einer Durchbrechung 23 im Grundkörper 10 der Runge 1 heraus bewegbar. Hierdurch ist es möglich, wie Figur 9 zeigt, den Fußträger 28 um das Schwenkgelenk 29 von der übrigen Runge 1 nach außen hin abzuklappen. Hierdurch wird das untere Ende der Runge 1 ebenfalls nach außen bewegt; gleichzeitig wird die axiale Länge der Runge 1 insgesamt verkleinert, wodurch der Rungenfuß 2 aus dem Rungenschuh 5 frei kommt. Danach kann dann die Runge 1 insgesamt seitwärts verschoben werden.

Zum Positionieren und Verriegeln der Runge 1 wird diese zunächst aus einer seitlich verschobenen Position in ihre Soll-Position verschoben. Mit zunächst noch nach außen hin abgeklapptem Fußträger 28 wird der Rungenfuß 2 in den Rungenschuh 5 eingesetzt. Durch Ausübung einer Schubkraft auf das obere Ende des Fußträgers 28 wird dieser wieder an die übrige Runge 1 angedrückt, wobei das Riegelelement 30 der Riegeleinrichtung 3 in die zugehörige Durchbrechung 23 eintritt. Durch anschließendes Verdrehen der Riegeleinrichtung 3 und des Riegelelementes 30 in Verriegelungsrichtung, d.h. im Beispiel gemäß Figur 9 um 90° im Uhrzeigersinn, tritt das Riegelelement 30 in einen Riegeleingriff mit der Durchbrechung 23 und den darin vorgesehenen, nach innen weisenden Vorsprüngen ein. In diesem Zustand sind der Fußträger 28 und die übrige Runge 1 gegeneinander fixiert und bilden ein starres, geradliniges Gebilde. Hierdurch ist die Runge 1 mit ihrem Rungenfuß 2 fest im Rungenschuh 5 fixiert und kann nicht mehr seitlich oder quer dazu verschoben werden.

Zur Erhöhung der Sicherheit gegen ein seitliches Verschieben der Runge 1 ist bei dem Beispiel nach Figur 9 links und rechts an dem Rungenfuß 2 je eine seitliche, nach hinten weisende Lasche 27 angeformt. Diese Laschen 27 übergreifen im verriegelten Zustand die seitlichen Kanten des Rungenschuhs 5 und verhindern so eine seitliche Verschiebung des Rungenfußes 2 relativ zum Rungenschuh 5. Im entriegelten Zustand kommen, wie Figur 9 zeugt, die Laschen 27 vom Rungenschuh 5 frei und eine Seitwärtsbewegung der Runge 1 wird dann nicht mehr behindert.

Zur Verdrehung der Riegeleinrichtung 3 und des zugehörigen Riegelelementes 30 dient ein von einer Bedienungsperson zu betätigender Hebel 4, der mit dem Riegelelement 30 verbunden ist. Der Hebel 4 verläuft dabei im wesentlichen rechtwinklig zur Drehachse des Riegelelementes 30, um eine möglichst günstige Hebelwirkung für das Verriegeln und Entriegeln der Riegeleinrichtung 3 zu erzielen.

Das Riegelelement 30 liegt zusammen mit dem damit verbundenen Hebel 4 in einer in Figur 9 nicht sichtbaren Lagerbohrung, die nach außen hin durch einen mit dem Riegelelement 30 einstückigen oder verbundenen Kragen 32 verdeckt ist. Mittels eines weiteren Kragens oder eines gleichwirkenden Mittels ist das Riegelelement 30 auf der Rückseite des Fußträgers 28 gegen eine Bewegung nach außen gesichert, wodurch das Riegelelement 30 im Fußträger 28 zwar um seine Mittelachse verdrehbar, jedoch nicht in seiner Axialrichtung bewegbar ist.

Das Riegelelement 30 und die zugehörige Durchbrechung 23 bilden hier miteinander eine Art Bajonettverschluß, der bei einer Verdrehung des Riegelelementes 30 mit Hilfe des mit einem Griffende 40 ausgebildeten Hebels 4 in und außer Eingriff bringbar ist.

Die Verriegelungsstellung der Riegeleinrichtung 3 wird durch Verschwenken des Hebels 4 um 90° im Uhrzeigersinn hergestellt. In der Verriegelungsstellung weist dann der Hebel 4 parallel zur Runge 1 verlaufend nach oben. Damit in dieser Stellung der Hebel 4 nicht störend nach außen hin vorragt, ist im Grundkörper 10 der Runge 1 oberhalb der Riegeleinrichtung 3 eine Aufnahme 14 ausgespart, in die der Hebel 4 in Verriegelungsstellung der Riegeleinrichtung 3 zu liegen kommt. Alternativ zu der Ausführung, wie sie in Figur 9 dargestellt ist, kann die Riegeleinrichtung 3 auch so gestaltet sein, daß in Verriegelungsstellung der Hebel 4 nach unten zeigt. Für diese Ausführung ist dann die Aufnahme 14 für den Hebel 4 im Fußträger 28 vorzusehen.

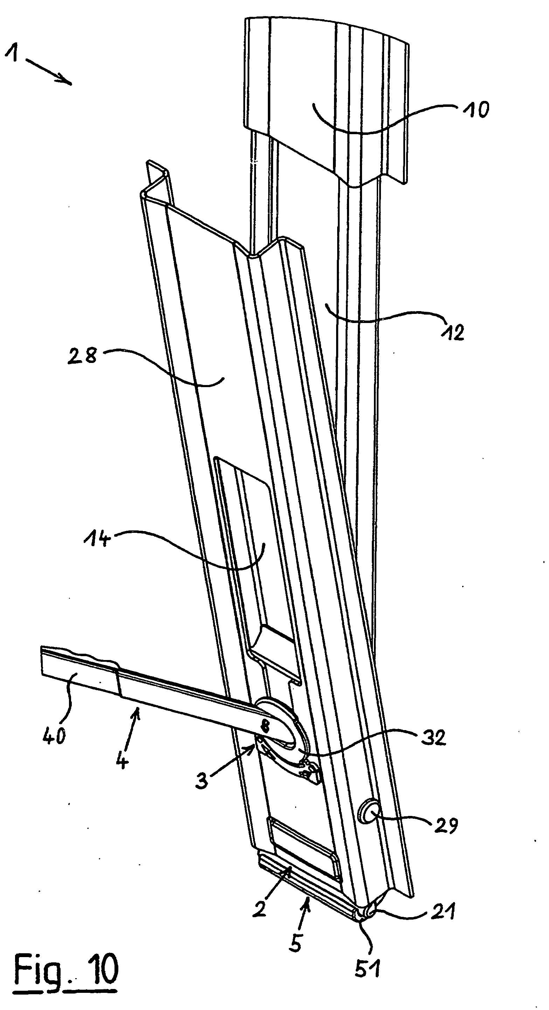

Figur 10 der Zeichnung schließlich zeigt als letztes Ausführungsbeispiel eine Runge 1, die eine Abwandlung der Runge gemäß Figur 9 darstellt. Auch bei der Runge 1 gemäß Figur 10 liegt der Fußträger 28 außerhalb der Runge 1 vor deren unterem Rungenteil 12. Ebenso liegt auch hier das Schwenkgelenk 29, das den Fußträger 28 mit der übrigen Runge 1 verbindet, im unteren Bereich des Fußträgers 28 und am unteren Ende der Runge 1. Mit dem unteren Ende des Fußträgers 28 ist auch hier wieder der Rungenfuß 2 verbunden, der in der zuvor schon beschriebenen Art und Weise in und außer Eingriff mit dem zugehörigen Rungenschuh 5 gebracht werden kann. Dazu hat auch hier der Rungenfuß 2 einen verdickten, abgerundeten Unterrand 21, der in eine passende Aufnahme 51 des Rungenschuhs 5 einsetzbar ist.

Unterschiedlich ist bei der Runge 1 gemäß Figur 10 im Vergleich zu der Runge 1 gemäß Figur 9, daß bei dem Beispiel gemäß Figur 10 die Riegeleinrichtung 3 nahe dem unteren Ende des Fußträgers 28 in einem geringeren Abstand oberhalb des Schwenkgelenks 29 angeordnet ist. In ihrer Konstruktion und Funktion entspricht die Riegeleinrichtung 3 hier den zuvor schon beschriebenen Riegeleinrichtungen 3.

Der Schwenkwinkel der Riegeleinrichtung 3 und ihres hier nicht sichtbaren Riegelelements beträgt auch bei dem Beispiel der Runge 1 gemäß Figur 10 etwa 90°. In Figur 10 ist dabei die Runge 1 mit entriegelter Riegeleinrichtung 3 und mit nach außen verschwenktem Fußträger 28 gezeigt. In diesem Zustand befindet sich das Riegelelement 30 außer Eingriff mit dem unteren Teil 12 der Runge 1, wodurch der Fußträger 28 relativ zur übrigen Runge 1 verschwenkt werden kann, um den Rungenfuß 2 aus dem Rungenschuh 5 zu lösen.

In verriegeltem Zustand liegt der Fußträger 28 fest am unteren Rungenteil 12 an und wird in dieser Stellung durch die Riegeleinrichtung 3 fixiert. Zur Herstellung dieser Verriegelungsstellung wird zunächst der Rungenfuß 2 in den Rungenfuß 5 eingesetzt, danach der Fußträger 28 an den unteren Rungenteil 12 angedrückt und abschließend durch Verdrehen der Riegeleinrichtung 3 mittels des zugehörigen Hebels 4 um etwa 90° im Uhrzeigersinn nach oben fixiert. In diesem Zustand bildet die Runge 1 mit dem Fußträger 28 eine starre, in sich nicht mehr bewegliche Einheit, deren Rungenfuß 2 nun fest in dem Rungenschuh 5 fixiert ist.

Zur Aufnahme des Hebels 4 und seines Griffendes 40 im Verriegelungszustand dient eine Aufnahme 14, die hier oberhalb der Riegeleinrichtung 3 im Fußträger 28 als Eintiefung oder Ausschnitt ausgebildet ist. Damit der Hebel 4 selbsttätig in diese Aufnahme 14 gelangt, ist der Hebel 4 an seinem radial inneren Ende gelenkig und unter Vorbelastung durch eine Feder mit der Riegeleinrichtung 3 verbunden, wobei die Vorbelastung so wirkt, daß das äußere Ende des Hebels 4 mit dem Griffende 40 in Richtung zur Runge 1 hin verschwenkt wird, wenn keine äußeren Kräfte angewendet werden.

Abweichend von den dargestellten Ausführungsbeispielen besteht auch die Möglichkeit, den Schwenk- oder Drehwinkel des Riegelelements 30 der Riegeleinrichtung 3 größer zu wählen, beispielsweise bis zu etwa 270°. Auf diese Weise kann erreicht werden, daß ein größerer axialer Bewegungsweg zur Verfügung gestellt wird, über welchen sich die Riegeleinrichtung 3 in Eingriff mit dem jeweils zugehörigen anderen Teil der Runge 1 befindet. Dies kann dazu benutzt werden, auf einer Ladefläche zu weit außen plazierte Ladegutstücke durch Verdrehen der schon in einem Anfangseingriff befindlichen Riegeleinrichtung 3 und mittels der dadurch hervorgerufenen großen Schubkraft in Richtung zum Inneren des Laderaums zu verschieben.

## Patentansprüche

1. Klapprunge (1) für den Aufbau eines Transportfahrzeugs oder -behälters, wobei die Runge (1) mit ihrem oberen Ende an der seitlichen Kante eines oberen Aufbauteils seitwärts verschiebbar gehalten und geführt ist, wobei die Runge (1) an ihrem unteren Ende einen Rungenfuß (2) aufweist, der mittels eines über einen unteren Rungenteil (12) verlaufenden Fußträgers (28) mit der übrigen Runge (1) verbunden ist, wobei die Verbindung zwischen dem Fußträger (28) und der übrigen Runge (1) durch ein Schwenkgelenk (29) mit einer horizontal in Aufbau-Längsrichtung verlaufenden Schwenkachse gebildet ist, wobei der Fußträger (28) mittels einer verstellbaren Riegeleinrichtung (3) lösbar gegen den übrigen Teil der Runge (1) verriegelbar ist, um den Rungenfuß (2) mit einem an der Kante eines unteren Aufbauteils angeordneten oder ausgebildeten Rungenschuh (5) zu verbinden, und wobei bei gelöster Riegeleinrichtung (3) die Runge (1) mit ihrem unteren Ende vom Aufbau weg nach außen verschwenkbar und so der Rungenfuß (2) aus dem Rungenschuh (5) entfernbar ist sowie dann die Runge (1) insgesamt seitwärts verschiebbar ist,
**dadurch gekennzeichnet,**
- **daß** die Riegeleinrichtung (3) durch ein im unteren Rungenteil (12) oder im Fußträger (28) im Abstand vom Schwenkgelenk (29) gelagertes Drehriegelelement (30) gebildet ist, das um eine quer zur Rungen-Längsachse und quer zur Aufbau-Längsrichtung verlaufende Drehachse (30') um sich selbst verdrehbar ist,
- **daß** das Drehriegelelement (30) in einer ersten, einer Verriegelungsstellung entsprechenden Verdrehungsendstellung den Fußträger (28)und den unteren Rungenteil (12) in Anlage aneinander hält und gegeneinander verriegelt und
- **daß** das Drehriegelelement (30) in einer zweiten, einer Entriegelungsstellung entsprechenden Verdrehungsendstellung die Verschwenkung des Fußträgers (28) mit dem Rungenfuß (2) einerseits und der übrigen Runge (1) andererseits relativ zueinander freigibt.

2. Runge nach Anspruch 1, **dadurch gekennzeichnet, daß** der Fußträger (28) aufbauinnenseitig von dem unteren Rungenteil (12) verläuft, daß das Schwenkgelenk (29) am oberen Ende des Fußträgers (28) angeordnet ist und daß das Drehriegelelement (30) im unteren Rungenteil (12) unterhalb des Schwenkgelenks (29) gelagert ist.

3. Runge nach Anspruch 1, **dadurch gekennzeichnet, daß** der Fußträger (28) aufbauaußenseitig von dem unteren Rungenteil (12) verläuft, daß das Schwenkgelenk (29) am unteren Ende des unteren Rungenteils (12) angeordnet ist und daß das Drehriegelelement (30) im Fußträger (28) oberhalb des Schwenkgelenks (29) gelagert ist.

4. Runge nach einem der vorhergehenden Ansprüche, **dadurch gekennzeichnet, daß** die Riegeleinrichtung (3) als Bajonettverriegelung ausgeführt ist, wobei das Drehriegelelement (30) mit Bajonettriegelteilen (33) und der Fußträger (28) oder der Rungenfuß (2) oder der untere Rungenteil (12) mit passenden Gegen-Bajonettriegelteilen versehen ist.

5. Runge nach Anspruch 4, **dadurch gekennzeichnet, daß** die Bajonettverriegelung Bereiche unterschiedlicher Steigung aufweist, wobei nahe den Verdrehungsendstellungen des Drehriegelelements (30) die Steigung kleiner ist als im dazwischen liegenden Verdrehungsbereich.

6. Runge nach einem der Ansprüche 1 bis 3, **dadurch gekennzeichnet, daß** das Drehriegelelement (30) mit einem Grob- oder Schnellschraubgewinde und der Fußträger (28) oder der Rungenfuß (2) oder der untere Rungenteil (12) mit einem passenden Gegengewinde versehen ist.

7. Runge nach einem der vorhergehenden Ansprüche, **dadurch gekennzeichnet, daß** das Drehriegelelement (30) zwischen seinen Verdrehungsendstellungen einen Drehwinkel zwischen etwa 90 und 270° aufweist.

8. Runge nach einem der vorhergehenden Ansprüche, **dadurch gekennzeichnet, daß** der Drehwinkel des Drehriegelelements (30) durch zwei Anschläge begrenzt ist.

9. Runge nach einem der vorhergehenden Ansprüche, **dadurch gekennzeichnet, daß** das Drehriegelelement (30) mit einem vom Aufbauäußeren her zugänglichen, manuell betätigbaren, im wesentlichen radial zur Drehachse (30') des Drehriegelelements (30) verlaufenden Hebel (4) versehen oder koppelbar ist.

10. Runge nach Anspruch 9, **dadurch gekennzeichnet, daß** der Hebel (4) so am Drehriegelelement (30) angeordnet oder anbringbar ist, daß er in der der Verriegelungsstellung entsprechenden Verdrehungsendstellung des Drehriegelelements (30) parallel zur Längsrichtung der Runge (1) verläuft.

11. Runge nach Anspruch 9 oder 10, **dadurch gekennzeichnet, daß** der Hebel (4) mittels eines Schwenkgelenks (41) gelenkig mit dem Drehriegelelement (30) verbunden ist, wobei die Schwenkachse (41') des Schwenkgelenks (41) quer zur Drehachse (30') des Drehriegelelements (30) und quer zur Längsrichtung des Hebels (4) verläuft.

12. Runge nach Anspruch 11, **dadurch gekennzeichnet, daß** der Hebel (4) durch wenigstens eine Feder mit einer Vorbelastungskraft beaufschlagt ist, die das freie Ende des Hebels (4) in Richtung zur Runge (1) verschwenkt.

13. Runge nach Anspruch 11 oder 12, **dadurch gekennzeichnet, daß** in der Runge (1) eine Eintiefung oder ein Ausschnitt (14) vorgesehen ist, die/der in der Verriegelungsstellung des Drehriegelelements (30) den Hebel (4) so aufnimmt, daß er nicht über eine äußere Oberfläche der Runge (1) vorragt.

14. Runge nach einem der vorhergehenden Ansprüche, **dadurch gekennzeichnet, daß** am Rungenfuß (2) seitlich je eine Lasche (27) angeformt ist, wobei die Laschen (27) im verriegelten Zustand der Runge (1) den Rungenschuh (5)seitlich übergreifen.

15. Runge nach einem der vorhergehenden Ansprüche, **dadurch gekennzeichnet, daß** im Rungenfuß (2) und/oder im Fußträger (28) ein Riegelkeil (24) verschieblich geführt ist und daß am Drehriegelelement (30) ein Betätigungsmittel (35) für eine Verschiebung des Riegelkeils (24) zwischen einer mit dem Rungenschuh (5) in Eingriff stehenden Verriegelungsstellung und einer mit dem Rungenschuh (5) außer Eingriff stehenden Entriegelungsstellung vorgesehen ist.

16. Runge nach Anspruch 15, **dadurch gekennzeichnet, daß** das Betätigungsmittel (35) für den Riegelkeil (24) durch einen am Drehriegelelement (30) vorgesehenen Exzenter gebildet ist, der bei Verdrehung des Drehriegelelements (30) aus seiner Entriegelungsstellung in seine Verriegelungsstellung den Riegelkeil (24) aus dessen Entriegelungsstellung in dessen Verriegelungsstellung bewegt.

17. Runge nach Anspruch 16, **dadurch gekennzeichnet, daß** der Exzenter (35) durch einen auf der dem Aufbauinneren zugewandten Stirnseite (31) des Drehriegelelements (30) exzentrisch angeordneten Nocken gebildet ist.

18. Runge nach einem der Ansprüche 15 bis 17, **dadurch gekennzeichnet, daß** der Riegelkeil (24) durch wenigstens eine Feder mit einer in Entriegelungsrichtung wirkenden Kraft vorbelastet ist.

19. Runge nach einem der Ansprüche 15 bis 18, **dadurch gekennzeichnet, daß** der Riegelkeil (24) die Gegen-Bajonettriegelteile oder das Gegengewinde aufweist, mit denen/dem das Drehriegelelement (30) durch seine Verdrehung um sich selbst in und außer Eingriff bringbar ist.

20. Runge nach Anspruch 19, **dadurch gekennzeichnet, daß** der Riegelkeil (24) plattenförmig ausgeführt ist und mit einer ovalen Durchbrechung (25) versehen ist, deren längere Achse senkrecht zur Riegelkeil-Verschiebungsrichtung verläuft und an deren Innenumfang die Gegen-Bajonettriegelteile oder das Gegengewinde vorgesehen sind/ist.

21. Runge nach einem der vorhergehenden Ansprüche, **dadurch gekennzeichnet, daß** die am Drehriegelelement (30) vorhandenen Bajonettriegelteile (33) radial nach außen vorragende Teile sind und daß die am Rungenfuß (2) oder Fußträger (28) oder Riegelkeil (24) vorhandenen Gegen-Bajonettriegelteile entsprechend geformte Ausnehmungen (23, 25) sind.

22. Runge nach einem der Ansprüche 1 bis 20, **dadurch gekennzeichnet, daß** die am Rungenfuß (2) oder Fußträger (28) oder Riegelkeil (24) vorhandenen Bajonett-riegelteile (25') radial nach innen in eine Durchbrechung (23, 25) vorragende Teile sind und daß die am Drehriegelelement (30) vorhandenen Gegen-Bajonettriegelteile entsprechend geformte Ausnehmungen (33') sind.

23. Runge nach einem der vorhergehenden Ansprüche, **dadurch gekennzeichnet, daß** das die Verbindung zwischen dem Fußträger (28) und der übrigen Runge (1) bildende Schwenkgelenk (29) in Verriegelungsstellung der Runge (1) eine Übertotpunktstellung einnimmt und daß der Totpunkt durch manuelles Ausüben einer zum Aufbauäußeren gerichteten Zugkraft auf die Runge überwindbar ist.

24. Runge nach einem der vorhergehenden Ansprüche, **dadurch gekennzeichnet, daß** die Runge (1) als teilbare Runge (1) mit je einem oberen und unteren Rungenteil ausgeführt ist, die lösbar miteinander verbunden sind.

25. Runge nach Anspruch 24, **dadurch gekennzeichnet, daß** die Rungenteile über eine Steckverbindung miteinander lösbar verbunden sind, die durch Bewegen der Rungenteile relativ zueinander in deren Axialrichtung oder in deren Querrichtung herstellbar und lösbar ist.

26. Runge nach einem der vorhergehenden Ansprüche, **dadurch gekennzeichnet, daß** der Rungenfuß (2) und der Rungenschuh (5) Schmiedeteile oder Gußteile aus Stahl sind und daß der Fußträger (28) und die übrige Runge (1) gepreßte oder gerollte oder gekantete Stahlblechteile sind.

27. Runge nach einem der vorhergehenden Ansprüche, **dadurch gekennzeichnet, daß** anstelle je eines Rungenschuhs (5) pro Runge (1) alternativ ein durchgehendes, mit einer Rungenschuhkontur ausgeführtes unteres Aufbau-Kantenprofil (6), vorzugsweise aus Leichtmetall, vorgesehen ist.

## Claims

1. Hinged stake (1) for the body of a transport vehicle or container, wherein the stake (1) is, at its upper end, held and guided at the lateral edge of an upper body part such that it is sliding in sideward direction, wherein the stake (1) comprises, at its lower end, a stake base (2) that is connected to the remaining stake (1) by means of a base carrier (28) extending across a lower part (12) of the stake, wherein the connection between the base carrier (28) and the remaining stake (1) is established by means of a swivel joint (29) with a swivel axis that extends horizontally in longitudinal direction of the body, wherein the base carrier (28) can be locked against the remaining part of the stake (1) in a detachable manner and by means of an adjustable locking device (3), in order to connect the stake base (2) to a stake shoe (5) that is arranged or formed at the edge of a lower part of the body, and wherein the stake (1) can, at its lower end, be swivelled away from the body in an outward direction while the locking device (3) is released, so that the stake base (2) can be removed from the stake shoe (5) and the stake (1) can be slid in sideward direction as a whole,
**characterized in that**
- the locking device (3) is formed by a rotary bolt element (30) that is supported in the lower stake part (12) or in the base carrier (28) and spaced apart from the swivel joint (29), wherein the rotary bolt element (30) can be rotated about its own axis and about an axis of rotation (30') that extends in transverse direction to the longitudinal axis of the stake and in transverse direction to the longitudinal direction of the body,
- the rotary bolt element (30), when being in a first final rotational position that corresponds to a locked position, holds the base carrier (28) and the lower stake part (12) adjacent to each other and locks them against each other, and
- the rotary bolt element (30), when being in a second final rotational position that corresponds to an unlocked position, releases the swivel motion of the base carrier (28) with the stake base (2) on the one hand and the remaining stake (1) on the other hand in relation to each other.

2. Stake according to Claim 1, **characterized in that** the base carrier (28) extends from the lower stake part (12) inside the body, that the swivel joint (29) is arranged at the upper end of the base carrier (28), and that the rotary bolt element (30) is supported in the lower stake part (12) at a level below the swivel joint (29).

3. Stake according to Claim 1, **characterized in that** the base carrier (28) extends from the lower stake part (12) outside of the body, that the swivel joint (29) is arranged at the lower end of the lower stake part (12), and that the rotary bolt element (30) is supported in the base carrier (28) at a level above the swivel joint (29).

4. Stake according to anyone of the preceding claims, **characterized in that** the locking device (3) is designed as a bayonet lock, wherein the rotary bolt element (30) is provided with bayonet lock parts (33) and the base carrier (28) or the stake base (2) or the lower stake part (12) is provided with the appropriate mating bayonet lock parts.

5. Stake according to Claim 4, **characterized in that** the bayonet lock comprises regions of varying pitch, wherein the pitch near the final rotational positions of the rotary bolt element (30) is less than that in the intermediate range of rotation.

6. Stake according to anyone of Claims 1 through 3, **characterized in that** the rotary bolt element (30) is provided with a coarse or quick thread and the base carrier (28) or the stake base (2) or the lower stake part (12) is provided with an appropriate mating thread.

7. Stake according to anyone of the preceding claims, **characterized in that** the rotary bolt element (30) comprises between its final rotational positions a rotational angle ranging from 90 to 270 degrees.

8. Stake according to anyone of the preceding claims, **characterized in that** the rotational angle of the rotary bolt element (30) is limited by two stops.

9. Stake according to anyone of the preceding claims, **characterized in that** the rotary bolt element (30) is provided with or can be coupled to a lever (4) that is accessible from the outside of the body, can be actuated manually and extends, in essence, in a radial direction in relation to the axis of rotation (30') of the rotary bolt element (30).

10. Stake according to Claim 9, **characterized in that** the lever (4) is arranged at or can be attached to the rotary bolt element (30) such that it extends in parallel to the longitudinal direction of the stake (1) with the rotary bolt element (30) being **in that** final rotational position that corresponds to the locked position.

11. Stake according to Claim 9 or 10, **characterized in that** the lever (4) is pivoted to the rotary bolt element (30) by means of a swivel joint (41), wherein the swivel axis (41') of the swivel joint (41) extends in transverse direction to the axis of rotation (30') of the rotary bolt element (30) and in transverse direction to the longitudinal direction of the lever (4).

12. Stake according to Claim 11, **characterized in that** at least one spring applies a preload force to the lever (4), wherein the preload force swings the free end of the lever (4) towards the stake (1).

13. Stake according to Claim 11 or 12, **characterized in that** a recess or cutout (14) is provided in the stake (1), wherein the recess or cutout (14) accepts the lever (4) such that the latter is prevented from projecting beyond an outer surface of the stake (1), while the rotary bolt element (30) is in its locked position.

14. Stake according to anyone of the preceding claims, **characterized in that** one tab (27) each is formed to fit to each of the sides of the stake base (2), wherein the tabs (27) reach beyond the side of the stake shoe (5) while the stake (1) is in its locked position.

15. Stake according to anyone of the preceding claims, **characterized in that** a locking block (24) is supported to be sliding in the stake base (2) and/or in the base carrier (28) and that an actuation device (35) is provided at the rotary bolt element (30) permitting the locking block (24) to be sliding between a locked position in engagement with the stake shoe (5) and in an unlocked position in disengagement with the stake shoe (5).

16. Stake according to Claim 15, **characterized in that** the actuation device (35) for the locking block (24) is formed by an eccentric provided on the rotary bolt element (30), wherein the eccentric moves the locking block (24) from its unlocked position to its locked position while the rotary bolt element (30) is turned from its unlocked position to its locked position.

17. Stake according to Claim 16, **characterized in that** the eccentric (35) is formed by a cam that is arranged eccentrically on that side (31) of the rotary bolt element (30) that is facing towards the inside of the body.

18. Stake according to anyone of Claims 15 through 17, **characterized in that** the locking block (24) is preloaded with a force acting in unlocking direction by means of at least one spring.

19. Stake according to anyone of Claims 15 through 18, **characterized in that** the locking block (24) comprises the mating bayonet lock parts or the mating thread that can be used to put the rotary bolt element (30), by being rotated about its own axis, in a position of engagement and disengagement.

20. Stake according to Claim 19, **characterized in that** the locking block (24) is designed in the shape of a plate and is provided with an oval breakthrough (25), the longer axis of which extends perpendicularly to the sliding direction of the locking block and at the internal perimeter of which the mating bayonet lock parts are or the mating thread is provided.

21. Stake according to anyone of the preceding claims, **characterized in that** the bayonet lock parts (33) provided at the rotary bolt element (30) are parts that are projecting in a radially outward direction and that the mating bayonet lock parts provided at the stake base (2) or base carrier (28) or locking block (24) are recesses (23, 25) of corresponding shape.

22. Stake according to anyone of Claims 1 through 20, **characterized in that** the bayonet lock parts (25') are parts that are projecting into a recess (23, 25) in a radially inward direction and that the mating bayonet lock parts provided at the rotary bolt element (30) are recesses (33') of corresponding shape.

23. Stake according to anyone of the preceding claims, **characterized in that** the swivel joint (29) forming the connection between the base carrier (28) and the remaining stake (1) assumes an overcenter position with the stake (1) in its locked position and that the dead-center position can be overcome by manually exerting on the stake a pulling force that is directed towards the outside of the body.

24. Stake according to anyone of the preceding claims, **characterized in that** the stake (1) is designed as a separable stake (1) with one upper stake part and one lower stake part that are connected to each other in a detachable manner.

25. Stake according to Claim 24, **characterized in that** the stake parts are connected to each other in a detachable manner, this being accomplished by means of a plug connection that can be established and broken by moving the stake parts in relation to each other in their axial direction or in their transverse direction.

26. Stake according to anyone of the preceding claims, **characterized in that** the stake base (2) and the stake shoe (5) are forged or cast parts made of steel and that the base carrier (28) and the remaining stake (1) are pressed or rolled or edged parts made of sheet steel.

27. Stake according to anyone of the preceding claims, **characterized in that** a continuous body edge profile (6) that is provided with a stake shoe contour and is preferrably made of light metal is, alternatively, provided in the stead of one stake shoe (5) per stake (1).

## Revendications

1. Rancher pliant (1) pour la construction d'un véhicule ou d'un récipient de transport, le rancher (1) étant maintenu et guidé de manière déplaçable latéralement en sa partie supérieure au niveau de l'arête latérale d'un élément de construction supérieur, le rancher (1) comportant un pied de rancher (2) en son extrémité inférieure, lequel est assemblé avec le reste du rancher (1) au moyen d'un support (28) du pied passant par une partie inférieure (12) du rancher, l'assemblage entre le support (28) du pied et le reste du rancher (1) étant constitué par une articulation pivotante (29) avec un axe de pivotement horizontal dans la direction longitudinale de la construction, le support (28) du pied étant verrouillable de manière amovible contre le reste du rancher (1) au moyen d'un dispositif de verrouillage (3) réglable, pour assembler le pied (2) du rancher à un sabot de rancher (5) situé ou réalisé sur l'arête d'une pièce de construction inférieure, et le rancher (1) pouvant, lorsque le dispositif de verrouillage (3) est débloqué, pivoter avec son extrémité inférieure vers l'extérieur en s'éloignant de la construction et le pied (2) du rancher pouvant ainsi être retiré du sabot (5) du rancher et le rancher (1) pouvant alors être déplacé latéralement dans son ensemble,
**caractérisé en ce que**
- le dispositif de verrouillage (3) est constitué par un élément d'espagnolette (30) logé dans la partie inférieure (12) du rancher ou dans le support (28) du pied à distance de l'articulation pivotante (29), lequel élément peut être déplacé rotativement autour de lui-même autour d'un axe de rotation (30') transversal par rapport à l'axe longitudinal du rancher et transversal par rapport au sens longitudinal de la construction,
- l'élément d'espagnolette (30), dans une première position finale de déplacement rotatif correspondant à une position de verrouillage, maintient le support (28) du pied et la partie inférieure (12) du rancher appliqués l'un sur l'autre et les bloque l'un contre l'autre et
- l'élément d'espagnolette (30), dans une deuxième position finale de déplacement rotatif correspondant à une position de déverrouillage, libère le pivotement du support (28) du pied avec le pied (2) du rancher, d'une part, et du reste du rancher (1), d'autre part, relativement l'un par rapport à l'autre.

2. Rancher selon la revendication 1, **caractérisé en ce que** le support (28) du pied part de la partie inférieure (12) du rancher, du côté intérieur de la construction, **en ce que** l'articulation pivotante (29) est située à l'extrémité supérieure du support (28) du pied et **en ce que** l'élément d'espagnolette (30) est logé dans la partie inférieure (12) du rancher en dessous de l'articulation pivotante (29).

3. Rancher selon la revendication 1, **caractérisé en ce que** le support (28) du pied part de la partie inférieure (12) du rancher, du côté extérieur de la construction, **en ce que** l'articulation pivotante (29) est située à l'extrémité inférieure de la partie inférieure (12) du rancher et **en ce que** l'élément d'espagnolette (30) est logé dans le support (28) du pied au-dessus de l'articulation pivotante (29).

4. Rancher selon l'une des revendications précédentes, **caractérisé en ce que** le dispositif de verrouillage (3) est réalisé en tant que verrouillage à baïonnette, l'élément d'espagnolette (30) étant pourvu de pièces de verrouillage à baïonnette (33) et le support (28) du pied ou le pied (2) du rancher ou la partie inférieure du rancher (12) étant pourvus de pièces complémentaires adaptées de verrouillage à baïonnette.

5. Rancher selon la revendication 4, **caractérisé en ce que** le verrouillage à baïonnette comporte des zones de pente différente, la pente, à proximité des positions finales de déplacement rotatif de l'élément d'espagnolette (30), étant plus petite que dans la zone de déplacement rotatif intermédiaire.

6. Rancher selon l'une des revendications 1 à 3, **caractérisé en ce que** l'élément d'espagnolette (30) est pourvu d'un filetage grossier ou rapide et le support (28) du pied ou le pied (2) du rancher ou la partie inférieure (12) du rancher est équipé d'un contre-filetage adapté.

7. Rancher selon l'une des revendications précédentes, **caractérisé en ce que** l'élément d'espagnolette (30) présente un angle de rotation compris entre à peu près 90 et 270° entre ses positions finales de déplacement rotatif.

8. Rancher selon l'une des revendications précédentes, **caractérisé en ce que** l'angle de rotation de l'élément d'espagnolette (30) est limité par deux butées.

9. Rancher selon l'une des revendications précédentes, **caractérisé en ce que** l'élément d'espagnolette (30) est pourvu d'un levier (4) accessible depuis l'extérieur de la construction, actionnable manuellement et sensiblement radial par rapport à l'axe de rotation (30') de l'élément d'espagnolette (30) ou peut y être couplé.

10. Rancher selon la revendication 9, **caractérisé en ce que** le levier (4) est situé ou peut être placé sur l'élément d'espagnolette (30) de manière telle qu'il est parallèle au sens longitudinal du rancher (1) dans la position finale de déplacement rotatif de l'élément d'espagnolette (30) correspondant à la position de verrouillage.

11. Rancher selon la revendication 9 ou 10, **caractérisé en ce que** le levier (4) est assemblé de manière articulée avec l'élément d'espagnolette (30) au moyen d'une articulation pivotante (41), l'axe de pivotement (41') de l'articulation pivotante (41) étant transversal par rapport à l'axe de rotation (30') de l'élément d'espagnolette (30) et transversal par rapport au sens longitudinal du levier (4).

12. Rancher selon 1a revendication 11, **caractérisé en ce que** le levier (4) est sollicité par au moins un ressort avec une force de précontrainte qui fait pivoter l'extrémité libre du levier (4) dans la direction du rancher (1).

13. Rancher selon la revendication 11 ou 12, **caractérisé en ce qu'**est prévu, dans le rancher (1), un creux ou une encoche (14) qui, dans la position de verrouillage de l'élément d'espagnolette (30), accueille le levier (4) de manière telle qu'il ne fait pas saillie par rapport à une surface extérieure du rancher (1).

14. Rancher selon l'une des revendications précédentes, **caractérisé en ce qu'**est moulée, sur le pied (2) du rancher, respectivement latéralement, une languette (27), les languettes (27) prenant latéralement le sabot (5) du rancher à l'état verrouillé du rancher (1).

15. Rancher selon l'une des revendications précédentes, **caractérisé en ce qu'**une clavette de verrouillage (24) est guidée de manière déplaçable dans le pied (2) du rancher et/ou dans le support (28) du pied et **en ce qu'**est prévu, sur l'élément d'espagnolette (30), un moyen d'actionnement (35) pour un déplacement de la clavette de verrouillage (24) entre une position de verrouillage en prise avec le sabot (5) du rancher et une position de déverrouillage hors prise avec le sabot (5) du rancher.

16. Rancher selon la revendication 15, **caractérisé en ce que** le moyen d'actionnement (35) pour la clavette de verrouillage (24) est constitué par un excentrique prévu sur l'élément d'espagnolette (30), lequel excentrique déplace la clavette de verrouillage (24) de sa position de déverrouillage dans sa position de verrouillage lors du déplacement rotatif de l'élément d'espagnolette (30) de sa position de déverrouillage dans as position de verrouillage.

17. Rancher selon la revendication 16, **caractérisé en ce que** l'excentrique (35) est constitué par une saillie située sur la face frontale (31) de l'élément d'espagnolette (30) tournée vers l'intérieur de la construction.

18. Rancher selon l'une des revendications 15 à 17, **caractérisé en ce que** la clavette de verrouillage (24) est précontrainte par au moins un ressort avec une force agissant dans le sens du déverrouillage.

19. Rancher selon l'une des revendications 15 à 18, **caractérisé en ce que** la clavette de verrouillage (24) comporte les pièces complémentaires de verrouillage à baïonnette ou le contre-filetage avec lesquelles /avec lequel l'élément d'espagnolette (30), par son déplacement rotatif autour de lui-même, peut être mis en prise et hors prise.

20. Rancher selon la revendication 19, **caractérisé en ce que** la clavette de verrouillage (24) est réalisée en forme de plaque et est pourvue d'une ouverture ovale (25), dont l'axe le plus long est perpendiculaire à la direction du déplacement de la clavette de verrouillage et sur le pourtour intérieur de laquelle est prévu / sont prévues le contre-filetage ou les pièces complémentaires de verrouillage à baïonnette.

21. Rancher selon l'une des revendications précédentes, **caractérisé en ce que** les pièces de verrouillage à baïonnette (33) présentes sur l'élément d'espagnolette (30) sont des pièces faisant saillie radialement vers l'extérieur et **en ce que** les pièces complémentaires de verrouillage à baïonnette présentes sur le pied (2) du rancher ou sur le support (28) du pied ou sur la clavette de verrouillage (24) sont des creux (23, 25) formés en conséquence.

22. Rancher selon l'une des revendications 1 à 20, **caractérisé en ce que** les pièces de verrouillage à baïonnette (25') présentes sur le pied (2) du rancher ou sur le support (28) du pied ou sur la clavette de verrouillage (24) sont des pièces faisant saillie radialement vers l'intérieur en passant par une ouverture (23, 25) et **en ce que** les pièces complémentaires de verrouillage à baïonnette présentes sur l'élément d'espagnolette (30) sont des creux (33')formés en conséquence.

23. Rancher selon l'une des revendications précédentes, **caractérisé en ce que** l'articulation pivotante (29) constituant la liaison entre le support (28) du pied et le reste du rancher (1) prend une position de point mort supérieur en position de verrouillage du rancher (1) et **en ce que** le point mort peut être franchi en exerçant manuellement une force de traction sur le rancher, dirigée vers l'extérieur de la construction.

24. Rancher selon l'une des revendications précédentes, **caractérisé en ce que** le rancher (1) est réalisé en tant que rancher (1) divisible comportant respectivement une partie de rancher supérieure et une partie de rancher inférieure, lesquelles sont assemblées entre elles de manière amovible.

25. Rancher selon la revendication 24, **caractérisé en ce que** les parties du rancher sont assemblées de manière amovible par emboîtement, lequel peut être réalisé et défait en déplaçant les parties du rancher relativement l'une par rapport à l'autre dans leur direction axiale ou dans leur direction transversale.

26. Rancher selon l'une des revendications précédentes, **caractérisé en ce que** le pied (2) du rancher et le sabot (5) du rancher sont des pièces forgées ou des pièces coulées en acier et **en ce que** le support (28) du pied et le reste du rancher (1) sont des pièces en tôle d'acier pressées, roulées ou pliées à arêtes vives.

27. Rancher selon l'une des revendications précédentes, **caractérisé en ce qu'**est prévu, alternativement, au lieu d'un sabot de rancher (5) par rancher (1), un profilé de contour (6) de construction inférieur continu réalisé avec un profil de sabot de rancher, lequel profilé est de préférence en métal léger.
